(19) Europäisches Patentamt
European Patent Office
Office européen des brevets

(11) **EP 4 686 131 A1**

(12) **EUROPEAN PATENT APPLICATION**
published in accordance with Art. 153(4) EPC

(43) Date of publication:
**28.01.2026 Bulletin 2026/05**

(21) Application number: **24774162.2**

(22) Date of filing: **20.03.2024**

(51) International Patent Classification (IPC):
**H04L 5/00** (2006.01)

(52) Cooperative Patent Classification (CPC):
**H04L 5/00; H04W 36/00; H04W 72/231;**
**H04W 74/0833**

(86) International application number:
**PCT/CN2024/082774**

(87) International publication number:
**WO 2024/193597 (26.09.2024 Gazette 2024/39)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.03.2023 CN 202310288848**

(71) Applicant: **Apogee Networks, LLC**
**Dallas, TX 75201 (US)**

(72) Inventors:
• LIU, Zheng
 **Shanghai 201206 (CN)**
• ZHANG, Xiaobo
 **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57) Disclosed in the present application are a method and apparatus used in a node for wireless communication. The method comprises: a node receiving a first information block, which is used for determining X1 candidate configurations, the node receiving a first PDCCH, which carries a first domain, and the node sending a first signal, which carries a random access preamble sequence, wherein any one of the X1 candidate configurations is used for determining at least one cell; when the value of the first domain carried by the first PDCCH is equal to a value other than X1 candidate values, the first signal is associated with a cell to which the first PDCCH belongs; and when the value of the first domain carried by the first PDCCH is equal to one of the X1 candidate values, the value of the first domain carried by the first PDCCH is used for determining a target configuration from among the X1 candidate configurations, and the first signal is associated with at least one cell determined by means of the target configuration. The present application ensures the synchronization performance.

FIG. 1

**Description**

**Technical Field**

The present application relates to a transmission method and an apparatus in a wireless communication system, and in particular to a method and apparatus for uplink synchronization in wireless communication.

**Background Art**

Application scenarios of future wireless communication systems are becoming increasingly diversified, and different application scenarios impose different performance requirements on the systems. In order to satisfy different performance requirements of various application scenarios, it was decided at the #72nd meeting of the 3rd Generation Partner Project (3GPP) Radio Access Network (RAN) that research would be conducted on a New Radio (NR) technology (also referred to as 5G). At the #75th meeting of 3GPP RAN, a Work Item (WI) of NR was approved, and the standardization work of NR was initiated.

In the new radio technology, uplink synchronization transmission is one of the most fundamental requirements. In order to adapt to diversified application scenarios and meet different requirements, 3GPP has been continuously evolving the uplink synchronization technology.

**Summary of the Invention**

When UE (User Equipment) moves from a coverage range of one cell to a coverage range of another cell, it is necessary to change the serving cell of the UE, that is, handover from a source cell to a target cell. In the related art, the serving cell change is usually triggered by L3 (Layer 3) measurements, and is implemented by reconfiguration with synchronization triggered through an RRC (Radio Resource Control) signaling. The serving cell change implemented at the L3 has the characteristics of long delay, high signaling overhead, and long interruption time. In order to overcome the above shortcomings, the 3GPP (3rd Generation Partner Project) RAN (Radio Access Network) introduced in Rel (Release)-17 technologies such as DC (Dual Connectivity), CPC (Conditional PSCell (Primary SCG (Secondary Cell Group) Cell) change), CPA (Conditional PSCell addition), and CHO (Conditional Handover), all of which are based on L3 implementation. At the 3GPP RAN #94e plenary meeting, it was decided to initiate the standardization work item (WI) for mobility enhancement technology based on an L1/L2 (Layer 1/Layer 2). The design objective of the L1/L2-based mobility enhancement technology is to implement fast switching of the serving cell of the UE. In view of requirements for uplink synchronization in mobility enhancement in an NR system, the present application discloses a solution. It should be noted that in the description of the present application, mobility enhancement is only taken as a typical application scenario or an example; and the design in the present application is also applicable to other scenarios facing similar problems (e.g., other scenarios requiring uplink synchronization across a plurality of cells, including but not limited to multi-antenna systems, multi-TRP (Transmitter Receiver Point) systems, capacity enhancement systems, short-range communication systems, unlicensed spectrum communication, IoT (Internet of Things), URLLC (Ultra Reliable Low Latency Communication) networks, and Internet of Vehicles, etc.), in which similar technical effects can be achieved. In addition, adopting a unified solution in different scenarios (including but not limited to multi-carrier scenarios) can also help reduce hardware complexity and costs. In case of no conflicts, embodiments and features in the embodiments in a first node device of the present application may be applied to a second node device, and vice versa. In particular, an explanation of terminologies, nouns, functions, and variables in the present application (if not specified) can refer to definitions in the TS36 series, TS38 series, and TS37 series of the specification protocol of 3GPP.

The present application discloses a method used in a first node for wireless communication, characterized by comprising:

receiving a first information block, which is used for determining X1 candidate configurations, X1 being a positive integer;

receiving a first PDCCH, which carries a first field; and

sending a first signal, the first PDCCH being used for triggering sending of the first signal, and the first signal carrying a random access preamble sequence,

wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

As one embodiment, by determining that the value of the first field is equal to a value other than the X1 candidate values, it is determined that the first signal is associated with the cell to which the first PDCCH belongs, which supports the sending of dynamic switching of a PRACH between a source cell and a target cell (or a candidate cell), ensures uplink synchronization performance, and simplifies standard design.

According to one aspect of the present application, the above method is characterized in that a first number value is equal to the number of bits comprised in the first field carried by the first PDCCH, the first number value is equal to a ceiling value of a logarithmic value of a base-2 reference value, and the reference value is equal to X1 plus 1.

As one embodiment, when the reference value being equal to X1 plus 1, an indication of dynamic switching between the source cell and the target cell (or the candidate cell) through the first field is supported, thereby simplifying design while ensuring compatibility.

According to one aspect of the present application, the above method is characterized in that the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to a value of the first field carried by the first PDCCH among the X1 candidate configurations.

According to one aspect of the present application, the method is characterized in that any one of the X1 candidate values belongs to a first candidate value set, a value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

According to one aspect of the present application, the above method is characterized by comprising:

sending a second information block,
wherein the second information block is used for indicating at least one capability parameter of a sender of the second information block, and the second information block is used for determining that the first PDCCH carries the first field; and a time interval length between the first PDCCH and the first signal in time domain is not less than a first threshold, and at least one of a relationship between the cell associated with the first signal and the cell to which the first PDCCH belongs or the second information block is used for determining the first threshold.

According to one aspect of the present application, the above method is characterized by comprising:

monitoring a second PDCCH in a target time window,
wherein the second PDCCH is used for responding to the first signal; and a value of the first field is used for determining at least one of a time length of the target time window or a start time of the target time window.

According to one aspect of the present application, the above method is characterized in that the first information block is used for determining a power ramping step, the first PDCCH is used for determining a first count value, and the power ramping step and the first count value are together used for determining a transmit power value of the first signal.

The present application discloses a method used in a second node for wireless communication, characterized by comprising:

sending a first information block, which is used for determining X1 candidate configurations, X1 being a positive integer;
sending a first PDCCH, which carries a first field; and
receiving a first signal, the first PDCCH being used for triggering sending of the first signal, and the first signal carrying a random access preamble sequence,
wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

According to one aspect of the present application, the above method is characterized in that a first number value is equal to the number of bits comprised in the first field carried by the first PDCCH, the first number value is equal to a ceiling value of a logarithmic value of a base-2 reference value, and the reference value is equal to X1 plus 1.

According to one aspect of the present application, the above method is characterized in that the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to a value of the first field carried by the first PDCCH among the X1 candidate configurations.

According to one aspect of the present application, the method is characterized in that any one of the X1 candidate values belongs to a first candidate value set, a value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

According to one aspect of the present application, the above method is characterized by comprising:

receiving a second information block,
wherein the second information block is used for indicating at least one capability parameter of a sender of the second information block, and the second information block is used for determining that the first PDCCH carries the first field; and a time interval length between the first PDCCH and the first signal in time domain is not less than a first threshold, and at least one of a relationship between the cell associated with the first signal and the cell to which the first PDCCH belongs or the second information block is used for determining the first threshold.

According to one aspect of the present application, the above method is characterized by comprising:

sending a second PDCCH in a target time window,
wherein the second PDCCH is used for responding to the first signal; and a value of the first field is used for determining at least one of a time length of the target time window or a start time of the target time window.

According to one aspect of the present application, the above method is characterized in that the first information block is used for determining a power ramping step, the first PDCCH is used for determining a first count value, and the power ramping step and the first count value are together used for determining a transmit power value of the first signal.

The present application discloses a first node device for wireless communication, characterized by comprising:

a first receiver receiving a first information block, which is used for determining X1 candidate configurations, X1 being a positive integer,
wherein the first receiver receives a first PDCCH, which carries a first field; and
a first transmitter sending a first signal, the first PDCCH being used for triggering sending of the first signal, and the first signal carrying a random access preamble sequence,
wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

The present application discloses a second node device for wireless communication, characterized by comprising:

a second transmitter sending a first information block, which is used for determining X1 candidate configurations, X1 being a positive integer,
wherein the second transmitter sends a first PDCCH, which carries a first field; and
a second receiver receiving a first signal, the first PDCCH being used for triggering sending of the first signal, and the first signal carrying a random access preamble sequence,
wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

**Brief Description of the Drawings**

Other features, objectives and advantages of the present application will become more apparent by reading the detailed description of non-limiting embodiments with reference to the following drawings:

FIG. 1 shows a flowchart of a first information block, a first PDCCH, and a first signal according to one embodiment of the present application;

FIG. 2 shows a schematic diagram of a network architecture according to one embodiment of the present application;

FIG. 3 shows a schematic diagram of a wireless protocol architecture of a user plane and a control plane according to one embodiment of the present application;

FIG. 4 shows a schematic diagram of a first node device and a second node device according to one embodiment of the present application;

FIG. 5 shows a flowchart of wireless signal transmission according to one embodiment of the present application;

FIG. 6 shows a schematic diagram of a first number value according to one embodiment of the present application;

FIG. 7 shows a schematic diagram of a relationship between X1 candidate configurations and X1 candidate values according to one embodiment of the present application;

FIG. 8 shows a schematic diagram of a first candidate value set according to one embodiment of the present application;

FIG. 9 shows a schematic diagram of a relationship between a first PDCCH and a first signal according to one embodiment of the present application;

FIG. 10 shows a schematic diagram of a target time window according to one embodiment of the present application;

FIG. 11 shows a schematic diagram of a power ramping step according to one embodiment of the present application;

FIG. 12 shows a structural block diagram of a processing apparatus in a first node device according to one embodiment of the present application; and

FIG. 13 shows a structural block diagram of a processing apparatus in a second node device according to one embodiment of the present application.

## Detailed Description of Embodiments

The technical solution of the present application will be further described in detail below in conjunction with drawings. It should be noted that in case of no conflicts, embodiments and features in the embodiments in the present application can be arbitrarily combined with each other.

Embodiment **1**

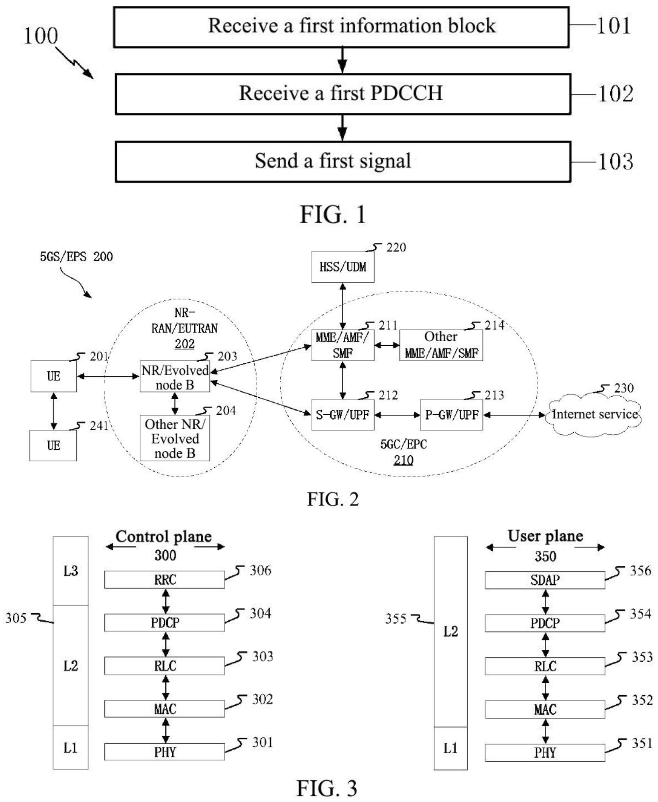

Embodiment 1 illustrates a flowchart 100 of a first information block, a first PDCCH, and a first signal according to one embodiment of the present application, as shown in FIG. 1. In FIG. 1, each block represents one step. It should be specifically emphasized that an order of blocks in the figure does not limit the temporal relationship of the steps represented.

In Embodiment 1, a first node device in the present application receives the first information block in step 101, the first information block being used for determining X1 candidate configurations, and X1 being a positive integer; the first node device in the present application receives the first PDCCH in step 102, and the first PDCCH carrying a first field; and the first node device in the present application sends the first signal in step 103, the first PDCCH being used for triggering sending of the first signal, and the first signal carrying a random access preamble sequence, wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

As one embodiment, the first information block is transmitted through an air interface or a wireless interface.

As one embodiment, the first information block comprises all or part of one high-layer signaling or one physical layer signaling.

As one embodiment, the first information block comprises all or part of one RRC (Radio Resource Control) layer signaling, or the first information block comprises all or part of one MAC (Medium Access Control) layer signaling.

As one embodiment, the first information block comprises all or part of one system information block (SIB).

As one embodiment, the first information block is UE-specific, or the first information block is cell-specific.

As one embodiment, the first information block is configured per cell.

As one embodiment, the first information block is for the cell to which the first PDCCH belongs.

As one embodiment, the first information block is for a cell other than the cell to which the first PDCCH belongs.

As one embodiment, the first information block is configured per cell group or per cell list.

As one embodiment, the first information block is configured per carrier, or the first information block is configured per BWP (bandwidth part), or the first information block is configured per band or per frequency range (FR).

As one embodiment, the first information block comprises all or part of fields in a DCI (Downlink Control Information) format.

As one embodiment, the first information block comprises IE "RRCReconfiguration"; or the first information block comprises all or part of IE "RRCReconfiguration-v1700-IEs"; or the first information block comprises all or part of IE "RRCReconfiguration-v1800-1Es"; or the first information block comprises all or part of IE "LTM_CellGroupReconfig-r18"; or the first information block comprises all or part of IE "ltmCellReconfig-r18"; or the first information block comprises all or part of IE "ltmCellConfig-r18"; or the first information block comprises all or part of IE "LTM_Config-r18"; or the first information block comprises all or part of IE "ServingCellConfig"; or the first information block comprises all or part of IE "CellGroupConfig"; or the first information block comprises all or part of IE "LTMConfig"; or the first information block comprises all or part of IE "L1L2TriggerMobilityConfig".

As one embodiment, the first information block is an IE that comprises a random access channel configuration.

As one embodiment, the first information block comprises an IE other than IE "RACH-ConfigDedicated" or IE "RACH-ConfigCommon".

As one embodiment, the first information block comprises a field "powerRampingStep"; or the first information block comprises all or part of IE "RACH-ConfigGeneric"; or the first information block comprises all or part of IE "RACH-ConfigDedicated"; or the first information block comprises all or part of IE "RACH-ConfigCommon"; or the first information block comprises all or part of IE "SpCellConfig"; or the first information block comprises all or part of IE "BWP-UplinkCommon"; or the first information block comprises all or part of IE "BWP-Uplink".

As one embodiment, the first information block comprises all or part of random access configuration information.

As one embodiment, the first information block comprises all or part of LTM configuration information.

As one embodiment, a technical feature of "the first information block being used for determining X1 candidate configurations" comprises the following meaning: the first information block is used by the first node device in the present application for determining the X1 candidate configurations.

As one embodiment, the technical feature of "the first information block being used for determining X1 candidate configurations" comprises the following meaning: all or part of the first information block is used for explicitly or implicitly indicating the X1 candidate configurations.

As one embodiment, the technical feature of "the first information block being used for determining X1 candidate configurations" comprises the following meaning: the first information block is used for determining one of the X1 candidate configurations.

As one embodiment, the technical feature of "the first information block being used for determining X1 candidate configurations" comprises the following meaning: the first information block is used for determining all or part of the X1 candidate configurations.

As one embodiment, the technical feature of "the first information block being used for determining X1 candidate configurations" comprises the following meaning: the first information block comprises X1 sub-information blocks, which are used for determining the X1 candidate configurations, respectively.

As one embodiment, the technical feature of "the first information block being used for determining X1 candidate configurations" comprises the following meaning: all or part of the first information block is used for explicitly or implicitly indicating a list comprising the X1 candidate configurations.

As one embodiment, the technical feature of "the first information block being used for determining X1 candidate configurations" comprises the following meaning: all or part of the first information block is used for adding at least one of the X1 candidate configurations to one configuration list.

As one embodiment, the technical feature of "the first information block being used for determining X1 candidate configurations" comprises the following meaning: all or part of the first information block is used for releasing at least one of the X1 candidate configurations from one configuration list.

As one embodiment, the technical feature of "the first information block being used for determining X1 candidate configurations" comprises the following meaning: all or part of the first information block is used for modifying a configuration list comprising at least one of the X1 candidate configurations.

As one embodiment, the first information block is used for determining only the X1 candidate configurations.

As one embodiment, the first information block is also used for determining a configuration other than the X1 candidate configurations.

As one embodiment, any one of the X1 candidate configurations is an RRC reconfiguration.

As one embodiment, at least one of the X1 candidate configurations is the RRC reconfiguration.

As one embodiment, any one of the X1 candidate configurations is an LTM configuration.

As one embodiment, any one of the X1 candidate configurations is an LTM candidate cell configuration.

As one embodiment, any one of the X1 candidate configurations is an LTM target cell configuration.

As one embodiment, any one of the X1 candidate configurations is the RRC reconfiguration for one LTE candidate cell.

As one embodiment, any one of the X1 candidate configurations is an LTM cell configuration or reconfiguration.

As one embodiment, any one of the X1 candidate configurations is an LTM cell group configuration or reconfiguration.

As one embodiment, at least one of the X1 candidate configurations is the LTM cell group configuration or reconfiguration.

As one embodiment, any one of the X1 candidate configurations is a cell group configuration.

As one embodiment, any one of the X1 candidate configurations is one IE.

As one embodiment, any one of the X1 candidate configurations comprises at least one field.

As one embodiment, any one of the X1 candidate configurations comprises at least one IE.

As one embodiment, any two of the X1 candidate configurations comprise at least one identical field.

As one embodiment, two of the X1 candidate configurations comprise at least one different field.

As one embodiment, the X1 candidate configurations comprise one reference candidate configuration, and at least one candidate configuration other than the reference candidate configuration among the X1 candidate configurations comprises a differential configuration or delta configuration with the reference candidate configuration.

As one embodiment, the X1 candidate configurations comprise one reference candidate configuration, and a value of one field comprised in at least one candidate configuration other than the reference candidate configuration among the X1 candidate configurations is used for indicating a difference value with the value of one field comprised in the reference candidate configuration.

As one embodiment, at least one of the X1 candidate configurations comprises at least a "RadioBearerConfig" IE or a field.

As one embodiment, any one of the X1 candidate configurations comprises at least a cell identifier or a cell group identifier (ID).

As one embodiment, any one of the X1 candidate configurations comprises at least a physical cell identifier (PCID).

As one embodiment, at least one of the X1 candidate configurations comprises at least a "MeasConfig" IE or a field.

As one embodiment, at least one of the X1 candidate configurations comprises at least a "CellGroupConfig" IE or a field.

As one embodiment, X1 is greater than 1.

As one embodiment, X1 is equal to 1.

As one embodiment, an upper limit value of X1 is equal to 4.

As one embodiment, the upper limit value of X1 is equal to 8.

As one embodiment, the upper limit value of X1 is equal to 16.

As one embodiment, the first PDCCH is a baseband signal of a PDCCH (physical downlink control channel).

As one embodiment, the first PDCCH is a radio frequency signal of the PDCCH.

As one embodiment, the first PDCCH is a PDCCH order.

As one embodiment, the first PDCCH carries DCI (downlink control information) used for the PDCCH order.

As one embodiment, the first PDCCH carries all or part of fields in a DCI format 1_0.

As one embodiment, the DCI format 1_0 is used for generating the first PDCCH.

As one embodiment, a value of a frequency domain resource assignment field comprised in DCI carried by the first PDCCH is equal to all "1".

As one embodiment, bits of the frequency domain resource assignment field comprised in the DCI carried by the first PDCCH are all set to "1".

As one embodiment, a CRC of a DCI format of the DCI carried by the first PDCCH is scrambled by a C-RNTI (Cell-Radio Network Temporary Identifier).

As one embodiment, a PDCCH candidate occupied by the first PDCCH belongs to a CSS (common search space) set.

As one embodiment, the PDCCH candidate occupied by the first PDCCH belongs to a UE-specific search space (USS) set.

As one embodiment, a technical feature of "the first PDCCH carrying a first field" comprises the following meaning: a format adopted by the DCI carried by the first PDCCH comprises the first field.

As one embodiment, the technical feature of "the first PDCCH carrying a first field" comprises the following meaning: DCI comprising the first field is transmitted on the first PDCCH.

As one embodiment, the technical feature of "the first PDCCH carrying a first field" comprises the following meaning: the DCI comprising the first field is mapped onto the first PDCCH.

As one embodiment, the technical feature of "the first PDCCH carrying a first field" comprises the following meaning: the DCI comprising the first field is used for generating the first PDCCH.

As one embodiment, the technical feature of "the first PDCCH carrying a first field" comprises the following meaning: information bits of the DCI carried by the first PDCCH comprise bits occupied by the first field.

As one embodiment, the first field is an LTM candidate cell (or target cell) configuration indicator (or identifier) (LTM candidate/target cell configuration indicator).

As one embodiment, the first field is an LTM candidate cell (or target cell) indicator (or identifier) (LTM candidate/target cell indicator).

As one embodiment, the first field is a candidate cell (or target cell) configuration indicator (or identifier). (candidate/target cell configuration indicator).

As one embodiment, the first field is a candidate cell (or target cell) indicator (or identifier) (candidate/target cell indicator).

As one embodiment, the first field is a re-interpretation of a legacy field.

As one embodiment, the first field is a re-interpretation of reserved bits.

As one embodiment, the first field occupies at least one reserved bit in a DCI format comprising the first field.

As one embodiment, for a PDCCH order other than an LTM, any bit occupied by the first field is a reserved bit.

As one embodiment, the first information block is used for determining that at least one reserved bit in the DCI carried by the first PDCCH is used as the first field.

As one embodiment, an information block other than the first information block is used for determining that at least one reserved bit in the DCI carried by the first PDCCH is used as the first field.

As one embodiment, at least one capability parameter reported by the first node device is used for determining that at least one reserved bit in the DCI carried by the first PDCCH is used as the first field.

As one embodiment, at least one capability parameter reported by the first node device and the first information block are together used for determining that at least one reserved bit in the DCI carried by the first PDCCH is used as the first field.

As one embodiment, the first signal is a PRACH (physical random access channel).

As one embodiment, the first signal is a radio frequency signal or a baseband signal of a PRACH.

As one embodiment, the first signal is used for a random access procedure.

As one embodiment, the first signal is used for an LTM (L1/L2-triggered mobility) procedure.

As one embodiment, the first signal is used for triggering a random access procedure of an LTM.

As one embodiment, a technical feature of "the first PDCCH being used for triggering sending of the first signal" comprises the following meaning: the first PDCCH is used for explicitly or implicitly indicating resources occupied by the first signal.

As one embodiment, the technical feature of "the first PDCCH being used for triggering sending of the first signal" comprises the following meaning: the first PDCCH is used for explicitly or implicitly indicating the random access preamble sequence carried by the first signal.

As one embodiment, the technical feature of "the first PDCCH being used for triggering sending of the first signal" comprises the following meaning: the first PDCCH is used for explicitly or implicitly indicating an index of an SS/PBCH associated with the first signal.

As one embodiment, the technical feature of "the first PDCCH being used for triggering sending of the first signal" comprises the following meaning: the first PDCCH is used by a sender of the first PDCCH in the present application for triggering the sending of the first signal.

As one embodiment, the technical feature of "the first PDCCH being used for triggering sending of the first signal" comprises the following meaning: the first PDCCH is used for explicitly or implicitly configuring or schedule at least one parameter of the first signal.

As one embodiment, the technical feature of "the first PDCCH being used for triggering sending of the first signal" comprises the following meaning: the sending of the first signal is a response to the first PDCCH.

As one embodiment, the technical feature of "the first PDCCH being used for triggering sending of the first signal" comprises the following meaning: the first PDCCH is used for explicitly or implicitly indicating that the first node device sends the first signal.

As one embodiment, a technical feature of "the first signal carrying a random access preamble sequence" comprises the following meaning: the first signal is used for transmission of the random access preamble sequence.

As one embodiment, the technical feature of "the first signal carrying a random access preamble sequence" comprises the following meaning: the random access preamble sequence is transmitted on the first signal.

As one embodiment, the technical feature of "the first signal carrying a random access preamble sequence" comprises the following meaning: the random access preamble sequence is used for generating the first signal.

As one embodiment, the technical feature of "the first signal carrying a random access preamble sequence" comprises the following meaning: the random access preamble sequence is mapped onto physical resources assigned to the first signal.

As one embodiment, a ZC (Zadoff-Chu) sequence is used for generating the random access preamble sequence carried by the first signal.

As one embodiment, a pseudo-random sequence is used for generating the random access preamble sequence carried by the first signal.

As one embodiment, the random access preamble sequence carried by the first signal adopts a preamble sequence format 0.

As one embodiment, the random access preamble sequence carried by the first signal adopts a preamble sequence format 1.

As one embodiment, the random access preamble sequence carried by the first signal adopts a preamble sequence format 2.

As one embodiment, the random access preamble sequence carried by the first signal adopts a preamble sequence format 3.

As one embodiment, the random access preamble sequence carried by the first signal adopts one of preamble sequence formats A1, A2, A3, B1, B2, B3, B4, C0, and C2.

As one embodiment, a preamble sequence format adopted by the random access preamble sequence carried by the first signal is signaling-configured.

As one embodiment, a sequence length of the random access preamble sequence carried by the first signal is equal to 139, or 571, or 839, or 1151.

As one embodiment, a technical feature of "any one of the X1 candidate configurations is used for determining at least one cell" comprises the following meaning: any one of the X1 candidate configurations is used by the first node device in the present application for determining at least one cell.

As one embodiment, the technical feature of "any candidate configuration of the X1 candidate configurations is used for determining at least one cell" comprises the following meaning: all or part of any one of the X1 candidate configurations is used for explicitly or implicitly indicating at least one cell.

As one embodiment, the technical feature of "any candidate configuration of the X1 candidate configurations is used for determining at least one cell" comprises the following meaning: at least one field (or IE) comprised in any one of the X1 candidate configurations is used for explicitly or implicitly indicating at least one cell.

As one embodiment, the technical feature of "any one of the X1 candidate configurations is used for determining at least one cell" comprises the following meaning: at least one field (or IE) comprised in any one of the X1 candidate configurations is used for explicitly or implicitly indicating an index (or identifier) of at least one cell.

As one embodiment, the technical feature of "any one of the X1 candidate configurations is used for determining at least one cell" comprises the following meaning: at least one field (or IE) comprised in any one of the X1 candidate configurations is used for explicitly or implicitly indicating one cell group or one cell list.

As one embodiment, any one of the X1 candidate configurations is used for determining only one cell.

As one embodiment, one of the X1 candidate configurations is used for determining a plurality of cells.

As one embodiment, one of the X1 candidate configurations is used for determining only one cell, and another one of the X1 candidate configurations is used for determining a plurality of cells.

As one embodiment, any cell determined by any one of the X1 candidate configurations is a candidate cell or a target cell.

As one embodiment, any cell determined by any one of the X1 candidate configurations is a candidate cell or a target cell of an LTM.

As one embodiment, any cell determined by any one of the X1 candidate configurations is a non-serving cell of the first node device.

As one embodiment, one cell determined by one of the X1 candidate configurations is a serving cell of the first node device.

As one embodiment, one cell determined by one of the X1 candidate configurations is the serving cell of the first node device, and one cell determined by one of the X1 candidate configurations is the non-serving cell of the first node device.

As one embodiment, one cell determined by one of the X1 candidate configurations is the cell to which the first PDCCH belongs.

As one embodiment, any cell determined by any one of the X1 candidate configurations is a cell other than the cell to which the first PDCCH belongs.

As one embodiment, any cell determined by any one of the X1 candidate configurations is a physical cell.

As one embodiment, the X1 candidate values are X1 possible values of the first field.

As one embodiment, any one of the X1 candidate values is one possible state of the first field.

As one embodiment, any one of the X1 candidate values is a candidate value or a candidate state of the first field.

As one embodiment, any one of the X1 candidate values is a non-negative integer.

As one embodiment, any one of the X1 candidate values is a state of one bitmap.

As one embodiment, any one of the X1 candidate values is one value of a character string.

As one embodiment, the correspondence between the X1 candidate configurations and the X1 candidate values is signaling-configured, or the correspondence between the X1 candidate configurations and the X1 candidate values is predefined, and the correspondence between the X1 candidate configurations and the X1 candidate values is fixed.

As one embodiment, the correspondence between the X1 candidate configurations and the X1 candidate values is related to the number of bits comprised in the first field.

As one embodiment, a technical feature of "the X1 candidate configurations respectively correspond to X1 candidate values" comprises the following meaning: the X1 candidate configurations are respectively associated with the X1 candidate values.

As one embodiment, the technical feature of "the X1 candidate configurations respectively correspond to X1 candidate values" comprises the following meaning: the X1 candidate values are used for representing the X1 candidate configurations, respectively.

As one embodiment, the technical feature of "the X1 candidate configurations respectively correspond to X1 candidate values" comprises the following meaning: the X1 candidate values are used for indicating the X1 candidate configurations, respectively.

As one embodiment, the technical feature of "the X1 candidate configurations respectively correspond to X1 candidate values" comprises the following meaning: the X1 candidate values are used for indexing or identifying the X1 candidate configurations, respectively.

As one embodiment, the technical feature of "the X1 candidate configurations respectively correspond to X1 candidate values" comprises the following meaning: the X1 candidate configurations respectively correspond to the X1 candidate values according to a table.

As one embodiment, the technical feature of "the X1 candidate configurations respectively correspond to X1 candidate values" comprises the following meaning: the X1 candidate configurations and the X1 candidate values respectively belong to two columns in the same table comprising at least X1 rows.

As one embodiment, two expressions of "the X1 candidate configurations respectively correspond to X1 candidate values" and "the X1 candidate values respectively correspond to the X1 candidate configurations" are equivalent or interchangeable.

As one embodiment, a technical feature of "a value of the first field carried by the first PDCCH is equal to a value other than the X1 candidate values" comprises the following meaning: the value of the first field carried by the first PDCCH is equal to any value other than the X1 candidate values.

As one embodiment, the technical feature of "a value of the first field carried by the first PDCCH is equal to a value other than the X1 candidate values" comprises the following meaning: the value of the first field carried by the first PDCCH is equal to one predefined value other than the X1 candidate values.

As one embodiment, the technical feature of "a value of the first field carried by the first PDCCH is equal to a value other than the X1 candidate values" comprises the following meaning: the value of the first field carried by the first PDCCH is equal to one fixed value other than the X1 candidate values.

As one embodiment, the technical feature of "a value of the first field carried by the first PDCCH is equal to a value other than the X1 candidate values" comprises the following meaning: the value of the first field carried by the first PDCCH is equal to one configured value other than the X1 candidate values.

As one embodiment, the technical feature of "a value of the first field carried by the first PDCCH is equal to a value other than the X1 candidate values" comprises the following meaning: the value of the first field carried by the first PDCCH is equal to a target value in the present application.

As one embodiment, the technical feature of "a value of the first field carried by the first PDCCH is equal to a value other than the X1 candidate values" comprises the following meaning: the value of the first field carried by the first PDCCH is equal to a value other than the X1 candidate values among all possible values of the first field carried by the first PDCCH.

As one embodiment, the cell to which the first PDCCH belongs is a cell that transmits the first PDCCH.

As one embodiment, the cell to which the first PDCCH belongs is a cell to which resources occupied by the first PDCCH belong.

As one embodiment, the cell to which the first PDCCH belongs is a cell where the first PDCCH is transmitted.

As one embodiment, the cell to which the first PDCCH belongs is a cell used for assigning resources of the first PDCCH.

As one embodiment, the cell to which the first PDCCH belongs is a cell identified by a cell identifier used for determining an initial value of a scrambling code of the first PDCCH.

As one embodiment, the cell to which the first PDCCH belongs is a cell to which transmission of the first PDCCH is synchronized.

As one embodiment, the cell to which the first PDCCH belongs is a cell with which an RRC connection is established during the transmission of the first PDCCH.

As one embodiment, "the cell to which the first PDCCH belongs" and "a special cell in which the first node device is located when receiving the first PDCCH" are equivalent or interchangeable.

As one embodiment, "the cell to which the first PDCCH belongs" and "a cell with a CU (Centralized Unit) in which the first node device is located when receiving the first PDCCH" are equivalent or interchangeable.

As one embodiment, "the cell to which the first PDCCH belongs" and "a cell with an RRC layer in which the first node device is located when receiving the first PDCCH" are equivalent or interchangeable.

As one embodiment, "the cell to which the first PDCCH belongs" and "a cell with a control plane in which the first node device is located when receiving the first PDCCH" are equivalent or interchangeable.

As one embodiment, "the cell to which the first PDCCH belongs" and "a cell with which the first node device has an RRC connection when receiving the first PDCCH" are equivalent or interchangeable.

As one embodiment, "the cell to which the first PDCCH belongs" and "a cell to which the first node device resides when receiving the first PDCCH" are equivalent or interchangeable.

As one embodiment, "the cell to which the first PDCCH belongs" and "a source cell of an LTM when the first PDCCH is received" are equivalent or interchangeable.

As one embodiment, "the cell to which the first PDCCH belongs" and "a cell to which the first node device is located before handover" are equivalent or interchangeable.

As one embodiment, a technical feature of "the first signal is associated with a cell to which the first PDCCH belongs" and "the cell to which the first PDCCH belongs is associated with the first signal" are equivalent or interchangeable.

As one embodiment, the technical feature of "the first signal is associated with a cell to which the first PDCCH belongs" comprises the following meaning: a cell that configures the first signal (or assigns resources of the first signal) is the same as the cell to which the first PDCCH belongs.

As one embodiment, the technical feature of "the first signal is associated with a cell to which the first PDCCH belongs" comprises the following meaning: the cell that configures the first signal (or assigns resources of the first signal) and the cell to which the first PDCCH belongs belong to the same TAG (Timing Advance Group).

As one embodiment, the technical feature of "the first signal is associated with a cell to which the first PDCCH belongs" comprises the following meaning: the cell that configures the first signal (or assigns resources of the first signal) is a scheduled cell, and the cell to which the first PDCCH belongs is a scheduling cell.

As one embodiment, the technical feature of "the first signal is associated with a cell to which the first PDCCH belongs" comprises the following meaning: the first signal is used for the cell to which the first PDCCH belongs.

As one embodiment, the technical feature of "the first signal is associated with a cell to which the first PDCCH belongs" comprises the following meaning: the first signal is used for obtaining a timing advance (TA) for the cell to which the first PDCCH belongs.

As one embodiment, the technical feature of "the first signal is associated with a cell to which the first PDCCH belongs" comprises the following meaning: the first signal is associated with an index value associated with the cell to which the first PDCCH belongs.

As one embodiment, the technical feature of "the first signal is associated with a cell to which the first PDCCH belongs" comprises the following meaning: the first signal is configured for the cell to which the first PDCCH belongs or for a cell group comprising the cell to which the first PDCCH belongs.

As one embodiment, the technical feature of "the first signal is associated with a cell to which the first PDCCH belongs" comprises the following meaning: a target recipient of the first signal is a network device of the cell to which the first PDCCH belongs.

As one embodiment, the technical feature of "the first signal is associated with a cell to which the first PDCCH belongs" comprises the following meaning: time-frequency resources and/or sequences occupied by the first signal are configured for the cell to which the first PDCCH belongs.

As one embodiment, the technical feature of "the first signal is associated with a cell to which the first PDCCH belongs" comprises the following meaning: the time-frequency resources and/or sequences occupied by the first signal are configured together with an index value associated with the cell to which the first PDCCH belongs.

As one embodiment, the technical feature of "the first signal is associated with a cell to which the first PDCCH belongs" comprises the following meaning: configuration information of the first signal is BWP-specific comprised in the cell to which the first PDCCH belongs.

As one embodiment, the technical feature of "the first signal is associated with a cell to which the first PDCCH belongs" comprises the following meaning: a configuration of a BWP comprised in the cell to which the first PDCCH belongs comprises a configuration of the first signal.

As one embodiment, the technical feature of "the first signal is associated with a cell to which the first PDCCH belongs" comprises the following meaning: frequency domain resources occupied by the first signal belong to the BWP (bandwidth part) comprised in the cell to which the first PDCCH belongs.

As one embodiment, the technical feature of "the first signal is associated with a cell to which the first PDCCH belongs" comprises the following meaning: the time-frequency resources and/or sequences occupied by the first signal are configured in an IE or a field for the cell to which the first PDCCH belongs.

As one embodiment, the technical feature of "the first signal is associated with a cell to which the first PDCCH belongs" comprises the following meaning: the IE or the field for the cell to which the first PDCCH belongs is used for determining the time-frequency resources and/or sequences occupied by the first signal.

As one embodiment, the technical feature of "the first signal is associated with a cell to which the first PDCCH belongs" comprises the following meaning: the IE or the field of a BWP comprised for the cell to which the first PDCCH belongs is used for determining the time - frequency resources and/or sequences occupied by the first signal.

As one embodiment, the technical feature of "the first signal is associated with a cell to which the first PDCCH belongs" comprises the following meaning: a random access preamble sequence index indicated by the first PDCCH is for the cell to which the first PDCCH belongs.

As one embodiment, the technical feature of "the first signal is associated with a cell to which the first PDCCH belongs" comprises the following meaning: an uplink carrier/supplementary uplink carrier indicator indicated by the first PDCCH is for the cell to which the first PDCCH belongs.

As one embodiment, the technical feature of "the first signal is associated with a cell to which the first PDCCH belongs" comprises the following meaning: an SS/PBCH (synchronization signal/physical broadcast channel) index indicated by the first PDCCH is for the cell to which the first PDCCH belongs.

As one embodiment, the technical feature of "the first signal is associated with a cell to which the first PDCCH belongs" comprises the following meaning: a PRACH mask index indicated by the first PDCCH is for the cell to which the first PDCCH belongs.

As one embodiment, the technical feature of "the first signal is associated with a cell to which the first PDCCH belongs" comprises the following meaning: the IE or the field of the BWP comprised for the cell to which the first PDCCH belongs is used for determining a configuration index of the first signal.

As one embodiment, the technical feature of "the first signal is associated with a cell to which the first PDCCH belongs" comprises the following meaning: the configuration index of the first signal is configured in the IE "SpCellConfig" for the cell to which the first PDCCH belongs.

As one embodiment, the technical feature of "the first signal is associated with a cell to which the first PDCCH belongs" comprises the following meaning: the configuration index of the first signal is configured in the IE "SCellConfig" for the cell to which the first PDCCH belongs.

As one embodiment, the technical feature of "the first signal is associated with a cell to which the first PDCCH belongs" comprises the following meaning: the time-frequency resources and/or sequences occupied by the first signal and the index value associated with the cell to which the first PDCCH belongs are configured or indicated in the same PDCCH order.

As one embodiment, the technical feature of "the first signal is associated with a cell to which the first PDCCH belongs" comprises the following meaning: a sending timing of the first signal is based on a downlink timing of the cell to which the first PDCCH belongs.

As one embodiment, the technical feature of "the first signal is associated with a cell to which the first PDCCH belongs" comprises the following meaning: a timing advance value of the first signal is a timing advance value of a downlink frame for the cell to which the first PDCCH belongs.

As one embodiment, the technical feature of "the first signal is associated with a cell to which the first PDCCH belongs" comprises the following meaning: the timing advance value of the downlink frame of the first signal for the cell to which the first PDCCH belongs is equal to 0.

As one embodiment, the technical feature of "the first signal is associated with a cell to which the first PDCCH belongs" comprises the following meaning: $N_{TA}$ of the downlink frame of the first signal for the cell to which the first PDCCH belongs is equal to 0.

As one embodiment, the technical feature of "the first signal is associated with a cell to which the first PDCCH belongs" comprises the following meaning: $N_{TA}$ of an uplink frame to which the first signal belongs in time domain, for the downlink frame of the cell to which the first PDCCH belongs that has the same frame number, is equal to 0.

As one embodiment, the technical feature of "the first signal is associated with a cell to which the first PDCCH belongs" comprises the following meaning: the configuration information of the first signal and an index (or identifier) of the cell to which the first PDCCH belongs are configured in the same IE or field.

As one embodiment, an association relationship between the first signal and the cell to which the first PDCCH belongs is configured or predefined.

As one embodiment, the value of the first field carried by the first PDCCH may also be equal to one reserved value.

As one embodiment, when the value of the first field carried by the first PDCCH is equal to one reserved candidate value, a behavior of the first node device is not defined.

As one embodiment, the target configuration is one of the X1 candidate configurations.

As one embodiment, a technical feature of "the value of the first field carried by the first PDCCH is used for determining a target configuration from the X1 candidate configurations " comprises the following meaning: the value of the first field carried by the first PDCCH is used by the first node device in the present application for determining the target configuration from the X1 candidate configurations.

As one embodiment, the technical feature of "the value of the first field carried by the first PDCCH is used for determining a target configuration from the X1 candidate configurations " comprises the following meaning: the value of the first field carried by the first PDCCH is used for explicitly or implicitly indicating the target configuration from the X1 candidate configurations.

As one embodiment, the technical feature of "the value of the first field carried by the first PDCCH is used for determining a target configuration from the X1 candidate configurations " comprises the following meaning: the target configuration is a candidate configuration corresponding to the value of the first field carried by the first PDCCH among the X1 candidate configurations.

As one embodiment, the technical feature of "the value of the first field carried by the first PDCCH is used for determining a target configuration from the X1 candidate configurations " comprises the following meaning: an index or sequence number of the target configuration among the X1 candidate configurations is equal to the value of the first field carried by the first PDCCH.

As one embodiment, the technical feature of "the value of the first field carried by the first PDCCH is used for determining a target configuration from the X1 candidate configurations " comprises the following meaning: the value of the first field carried by the first PDCCH is used for explicitly or implicitly indicating an identifier of the target configuration among the X1 candidate configurations.

As one embodiment, at least one cell determined by the target configuration is at least one cell indicated or configured by the target configuration.

As one embodiment, at least one cell determined by the target configuration is a cell whose cell index or identifier is equal to at least one cell index or identifier indicated or configured by the target configuration.

As one embodiment, the target configuration is only used for determining one cell.

As one embodiment, the target configuration is used for determining a plurality of cells.

As one embodiment, a technical feature of "the first signal is associated with at least one cell determined by the target configuration" and "at least one cell determined by the target configuration is associated with the first signal" are equivalent or interchangeable.

As one embodiment, the technical feature of "the first signal is associated with at least one cell determined by the target configuration" comprises the following meaning: a cell configuring the first signal (or assigning resources of the first signal) is the same as one cell determined by the target configuration.

As one embodiment, the technical feature of "the first signal is associated with at least one cell determined by the target configuration" comprises the following meaning: the cell configuring the first signal (or assigning resource of the first signal) and at least one cell determined by the target configuration belong to the same TAG (Timing Advance Group).

As one embodiment, the technical feature of "the first signal is associated with at least one cell determined by the target configuration" comprises the following meaning: the first signal is used for at least one cell determined by the target configuration.

As one embodiment, the technical feature of "the first signal is associated with at least one cell determined by the target configuration" comprises the following meaning: the first signal is used for obtaining a timing advance (TA) of at least one cell determined for the target configuration.

As one embodiment, the technical feature of "the first signal is associated with at least one cell determined by the target configuration" comprises the following meaning: the first signal is associated with an index value associated with at least one cell determined by the target configuration.

As one embodiment, the technical feature of "the first signal is associated with at least one cell determined by the target configuration" comprises the following meaning: the first signal is configured for at least one cell determined by the target configuration or for a cell group comprising at least one cell determined by the target configuration.

As one embodiment, the technical feature of "the first signal is associated with at least one cell determined by the target configuration" comprises the following meaning: the target recipient of the first signal is the network device of at least one cell determined by the target configuration.

As one embodiment, the technical feature of "the first signal is associated with at least one cell determined by the target configuration" comprises the following meaning: the time - frequency resources and/or sequence occupied by the first signal are configured for at least one cell determined by the target configuration.

As one embodiment, the technical feature of "the first signal is associated with at least one cell determined by the target configuration" comprises the following meaning: the time-frequency resources and/or sequences occupied by the first signal are configured together with the index value associated with at least one cell determined by the target configuration.

As one embodiment, the technical feature of "the first signal is associated with at least one cell determined by the target configuration" comprises the following meaning: the configuration information of the first signal is BWP-specific comprised in one cell determined by the target configuration.

As one embodiment, the technical feature of "the first signal is associated with at least one cell determined by the target configuration" comprises the following meaning: a configuration of a BWP comprised in at least one cell determined by the target configuration comprises a configuration of the first signal.

As one embodiment, the technical feature of "the first signal is associated with at least one cell determined by the target configuration" comprises the following meaning: the frequency domain resources occupied by the first signal belongs to a BWP (bandwidth part) comprised in one cell determined by the target configuration.

As one embodiment, the technical feature of "the first signal is associated with at least one cell determined by the target configuration" comprises the following meaning: the time-frequency resources and/or sequences occupied by the first signal are configured in an IE or a field for at least one cell determined by the target configuration.

As one embodiment, the technical feature of "the first signal is associated with at least one cell determined by the target configuration" comprises the following meaning: the IE or the field for at least one cell determined by the target configuration is used for determining the time-frequency resources and/or sequences occupied by the first signal.

As one embodiment, the technical feature of "the first signal is associated with at least one cell determined by the target configuration" comprises the following meaning: an IE or a field for a BWP comprised in one cell determined by the target configuration is used for determining the time-frequency resources and/or sequences occupied by the first signal.

As one embodiment, the technical feature of "the first signal is associated with at least one cell determined by the target configuration" comprises the following meaning: the random access preamble sequence index indicated by the first PDCCH is for at least one cell determined by the target configuration.

As one embodiment, the technical feature of "the first signal is associated with at least one cell determined by the target configuration" comprises the following meaning: the uplink carrier/supplementary uplink carrier indicator indicated by the first PDCCH is for at least one cell determined by the target configuration.

As one embodiment, the technical feature of "the first signal is associated with at least one cell determined by the target configuration" comprises the following meaning: the SS/PBCH (synchronization signal/physical broadcast channel) index indicated by the first PDCCH is for at least one cell determined by the target configuration.

As one embodiment, the technical feature of "the first signal is associated with at least one cell determined by the target configuration" comprises the following meaning: the PRACH mask index indicated by the first PDCCH is for at least one cell determined by the target configuration.

As one embodiment, the technical feature of "the first signal is associated with at least one cell determined by the target configuration" comprises the following meaning: the target configuration comprises configuration information (or a configuration index) of the first signal.

As one embodiment, the technical feature of "the first signal is associated with at least one cell determined by the target configuration" comprises the following meaning: the target configuration comprises an index or an identifier of at least one cell determined by the target configuration and the configuration information (or the configuration index) of the first signal.

As one embodiment, the technical feature of "the first signal is associated with at least one cell determined by the target configuration" comprises the following meaning: the IE or the field for the BWP comprised in at least one cell determined by the target configuration is used for determining the configuration information or the configuration index of the first signal.

As one embodiment, the technical feature of "the first signal is associated with at least one cell determined by the target configuration" comprises the following meaning: the configuration information or the configuration index of the first signal is configured in the IE "SpCellConfig" comprised in the target configuration.

As one embodiment, the technical feature of "the first signal is associated with at least one cell determined by the target configuration" comprises the following meaning: the configuration information or the configuration index of the first signal is configured in the IE "SCellConfig" comprised in the target configuration.

As one embodiment, the technical feature of "the first signal is associated with at least one cell determined by the target configuration" comprises the following meaning: the time - frequency resources and/or sequences occupied by the first signal and the index value associated with at least one cell determined by the target configuration are configured or indicated in the same PDCCH order.

As one embodiment, the technical feature of "the first signal is associated with at least one cell determined by the target configuration" comprises the following meaning: the sending timing of the first signal is a downlink timing of one cell determined based on the target configuration.

As one embodiment, the technical feature of "the first signal is associated with at least one cell determined by the target configuration" comprises the following meaning: the timing advance value of the first signal is a timing advance value of a downlink frame for one cell determined by the target configuration.

As one embodiment, the technical feature of "the first signal is associated with at least one cell determined by the target configuration" comprises the following meaning: the timing advance value of a downlink frame of the first signal for one cell determined by the target configuration is equal to 0.

As one embodiment, the technical feature of "the first signal is associated with at least one cell determined by the target configuration" comprises the following meaning: $N_{TA}$ of a downlink frame of the first signal for one cell determined by the target configuration is equal to 0.

As one embodiment, the technical feature of "the first signal is associated with at least one cell determined by the target configuration" comprises the following meaning: in an uplink frame to which the first signal belongs in time domain, $N_{TA}$ of a downlink frame for one cell determined by the target configuration that has the same frame number is equal to 0.

As one embodiment, the technical feature of "the first signal is associated with at least one cell determined by the target configuration" comprises the following meaning: the configuration information of the first signal and the index (or identifier) of at least one cell determined by the target configuration are configured in the same IE or field.

As one embodiment, the number of bits comprised in the first field carried by the first PDCCH is equal to a ceiling value of a logarithmic value of a base-2 characteristic value, and the characteristic value is equal to the upper limit value of X1.

As one embodiment, the number of bits comprised in the first field carried by the first PDCCH is equal to the ceiling value of the logarithmic value of the base-2 characteristic value, and the characteristic value is equal to X1.

As one embodiment, the number of bits comprised in the first field carried by the first PDCCH is equal to the ceiling value of the logarithmic value of the base-2 characteristic value, and the characteristic value is equal to the upper limit value of X1 plus 1.

As one embodiment, when the first information block is not provided, the number of bits comprised in the first field carried by the first PDCCH is equal to 0.

As one embodiment, when the first information block is not provided, the first PDCCH does not carry the first field.

As one embodiment, when the first information block is not provided, a bit carried by the first PDCCH corresponding to the first field is a reserved bit.

As one embodiment, at least one capability parameter reported by the first node device is used for determining an upper limit value of a time interval length between the first PDCCH and the first signal in time domain.

As one embodiment, a relationship between the cell associated with the first signal and the cell to which the first PDCCH belongs is used for determining the upper limit value of the time interval length between the first PDCCH and the first signal in time domain.

As one embodiment, an information block other than the first information block is used for determining a power ramping step, and one count value determined by the first PDCCH and the power ramping step are together used for determining a transmit power value of the first signal.

## Embodiment 2

Embodiment 2 illustrates a schematic diagram of a network architecture according to the present application, as shown in FIG. 2. FIG. 2 illustrates a diagram of a network architecture 200 of 5G NR, LTE (Long-Term Evolution) and LTE-A (Long-Term Evolution Advanced) systems. The 5G NR or LTE network architecture 200 may be referred to as 5GS (5G System)/EP S (Evolved Packet System) 200 or some other suitable terminologies. The 5GS/EPS 200 may comprise one piece of or a plurality of pieces of UE (User Equipment) 201, an NG-RAN (Next Generation Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, however those skilled in the art will readily understand that various concepts presented throughout the present application can be extended to networks or other cellular networks that provide circuit switching services. The NG-RAN comprises an NR/evolved Node B (gNB/eNB) 203 and other gNBs (eNBs) 204. The gNB(eNB)203 provides user and control plane protocol termination toward the UE201. The gNB(eNB)203 may be connected to other gNBs (eNBs) 204 via an Xn/X2 interface (e.g.,backhaul). The gNB(eNB)203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The gNB(eNB)203 provides the UE201 with an access point to the 5GC/EPC210. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB(eNB)203 is connected to the5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically comprise the Internet, an intranet, an IMS (IP Multimedia Subsystem), and a packet switching streaming service.

As one embodiment, the UE201 corresponds to a first node device in the present application.

As one embodiment, the gNB(eNB)201 corresponds to a second node device in the present application.

## Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 of a first node device (UE or a gNB) and a second node device (the gNB or the UE) using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301 and is responsible for the link between the first node device and the second node device through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second node device. The PDCP sublayer 304 provides multiplexing between different radio bearers and logical channels. The PDCP sublayer 304 also provides security by encrypting data packets, and provides inter-cell mobility support of the first node device between the second node devices. The RLC sublayer 303 provides segmentation and reassembly of upper layer data packets, retransmitting of lost data packets, and reordering of data packets to compensate for disordered reception caused by an HARQ. The MAC sublayer 302 provides multiplexing between logic channels and the transmission channels. The MAC sublayer 302 is also responsible for assigning various radio resources (e.g., resource blocks) in one cell between the first node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling between the second node device and the first node device. The radio protocol architecture for the user plane 350 comprises the Layer 1 (L1 layer) and the Layer 2 (L2 layer). The radio protocol architecture for the first node device and the second node device in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce radio transmitting overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first node device may have several upper layers above the L2 layer 355, comprising a network layer (e.g., an IP layer) terminating at a P-GW on a network side and an application layer terminating at another end of the connection (e.g., remote UE, a server, etc.).

As one embodiment, the wireless protocol architecture in FIG. 3 is applicable to the first node device in the present application.

As one embodiment, the wireless protocol architecture in FIG. 3 is applicable to the second node device in the present application.

## Embodiment 4

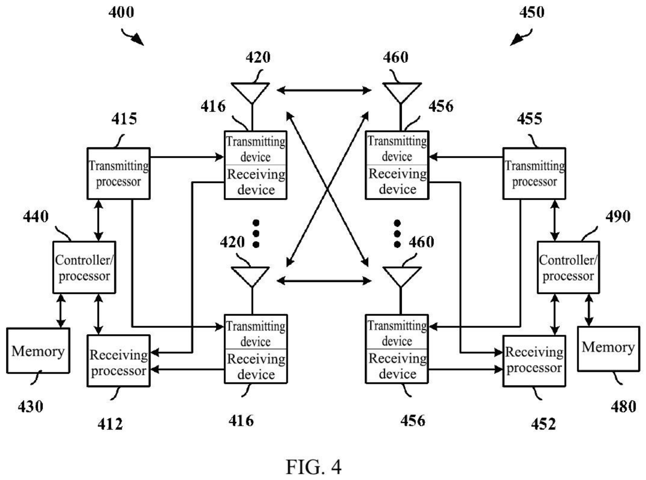

Embodiment 4 shows a schematic diagram of a first node device and a second node device according to one embodiment of the present application, as shown in FIG. 4.

The first node device (450) may comprise a controller/processor 490, a data source/buffer 480, a receiving processor 452, a transmitting device/receiving device 456, and a transmitting processor 455, and the transmitting device/receiving device 456 comprises an antenna 460.

The second node device (410) may comprise a controller/processor 440, a data source/buffer 430, a receiving processor 412, a transmitting device/receiving device 416, and a transmitting processor 415, and the transmitting device/receiving device 416 comprises an antenna 420.

In a DL (Downlink), an upper-layer packet, such as high-layer information comprised in a first information block in the present application, is provided to the controller/processor 440. The controller/processor 440 implements functions of an L2 layer and higher layers. In the DL, the controller/processor 440 provides packet header compression, encryption, packet segmentation and reordering, multiplexing between logical and transport channels, and radio resource assignment to the first node device 450 based on various priority metrics. The controller/processor 440 is also responsible for HARQ operations, retransmitting of lost packets, and signalings to the first node device 450, for example the high-layer information comprised in the first information block in the present application is generated in the controller/processor 440. The transmitting processor 415 implements various signal processing functions for an L1 layer (i.e., a physical layer), comprising coding, interleaving, scrambling, modulation, power control/assignment, precoding, and physical layer control signaling generation, etc., for example the generation of a physical layer signal carrying the first information block in the present application, a first PDCCH and a physical layer signal corresponding to a second PDCCH is completed at the transmitting processor 415. Generated modulation symbols are divided into parallel streams. Each stream is mapped to a corresponding multi-carrier subcarrier and/or a multi-carrier symbol, and then mapped to the antenna 420 by the transmitting processor 415 via the transmitting device 416 to be transmitted in the form of a radio frequency signal. At a receiving end, each receiving device 456 receives the radio frequency signal through the corresponding antenna 460, and each receiving device 456 recovers baseband information modulated onto a radio frequency carrier and provide s the baseband information to the receiving processor 452. The receiving processor 452 implements various signal reception and processing functions of the L1 layer. The signal reception and processing functions comprise reception of the physical layer signal carrying the first information block in the present application, the first PDCCH and the second PDCCH, demodulation based on various modulation schemes (for example, binary phase shift keying (BPSK), and quadrature phase shift keying (QPSK)) using multi-carrier symbols in a multi-carrier symbol stream, followed by descrambling, decoding and deinterleaving to recover data or control transmitted by the second node device 410 on a physical channel, and then providing the recovered data and control signals to the controller/processor 490. The controller/processor 490 is responsible for the L2 layer and higher layers, and the controller/processor 490 interprets the high-layer information comprised in the first information block in the present application. The controller/processor may be associated with a memory 480 storing program codes and data. The memory 480 may be referred to as a computer-readable medium.

In an uplink (UL) transmission, similar to a downlink transmission, high-layer information comprised in a second information block in the present application is generated by the controller/processor 490. The transmitting processor 455 then implements various signal transmitting processing functions for the L1 layer (i.e., a physical layer), comprising generation of a physical layer signal carrying the second information block and a first signal in the transmitting processor 455. The generated signals are then mapped by the transmitting processor 455 to the antenna 460 via the transmitting device 456 and transmitted in the form of a radio frequency signal. The receiving device 416 receives the radio frequency signal through the corresponding antenna 420, and each receiving device 416 recovers baseband information modulated onto a radio frequency carrier and provides the baseband information to the receiving processor 412. The receiving processor 412 implements various signal reception processing functions for the L1 layer (i.e., the physical layer), comprising receiving and processing a physical layer signal carrying the second information block and the first signal, and then providing the data and/or control signals to the controller/processor 440. The functions for the L2 layer implemented in the controller/processor 440 comprise interpreting the high-layer information, comprising interpreting the high-layer information comprised by the second information block. The controller/processor may be associated with the buffer 430 storing program codes and data. The buffer 430 may be a computer-readable medium.

As one embodiment, the first node device 450 apparatus comprises: at least one processor and at least one memory, wherein the at least one memory comprises computer program codes; the at least one memory and the computer program code are configured to be used together with the at least one processor, the first node device 450 at least: receives the first information block, which is used for determining X1 candidate configurations, X1 being a positive integer; receives the first PDCCH, which carries a first field; and sends the first signal, the first PDCCH being used for triggering sending of the first signal, and the first signal carrying a random access preamble sequence, wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

As one embodiment, the first node device 450 apparatus comprises: a memory storing a computer-readable instruction program, which generates actions when executed by at least one processor, the actions comprising: receiving the first information block, which is used for determining the X1 candidate configurations, X1 being a positive integer; receiving the first PDCCH, which carries the first field; and sending the first signal, the first PDCCH being used for triggering the sending of the first signal, and the first signal carrying the random access preamble sequence, wherein any one of the X1 candidate configurations is used for determining at least one cell, and the X1 candidate configurations respectively correspond to the X1 candidate values; when the value of the first field carried by the first PDCCH is equal to the value other than the X1 candidate values, the first signal is associated with the cell to which the first PDCCH belongs; and when the value of the first field carried by the first PDCCH is equal to one of the X1 candidate values, the value of the first field carried by the first PDCCH is used for determining the target configuration from the X1 candidate configurations, and the first signal is associated with at least one cell determined by the target configuration.

As one embodiment, the second node device 410 apparatus comprises: at least one processor and at least one memory, wherein the at least one memory comprises computer program codes; and the at least one memory and the computer program codes are configured to be used together with the at least one processor. The second node device 410 apparatus at least: sends the first information block, which is used for determining the X1 candidate configurations, X1 being a positive integer; sends the first PDCCH, which carries the first field; and receives the first signal, the first PDCCH being used for triggering the sending of the first signal, and the first signal carrying the random access preamble sequence, wherein any one of the X1 candidate configurations is used for determining at least one cell, and the X1 candidate configurations respectively correspond to the X1 candidate values; when the value of the first field carried by the first PDCCH is equal to the value other than the X1 candidate values, the first signal is associated with the cell to which the first PDCCH belongs; and when the value of the first field carried by the first PDCCH is equal to one of the X1 candidate values, the value of the first field carried by the first PDCCH is used for determining the target configuration from the X1 candidate configurations, and the first signal is associated with at least one cell determined by the target configuration.

As one embodiment, the second node device 410 comprises: a memory storing a computer-readable instruction program, which generates actions when executed by at least one processor, the actions comprising: sending the first information block, which is used for determining the X1 candidate configurations, X1 is a positive integer; sending the first PDCCH, which carries the first field; and receiving the first signal, the first PDCCH being used for triggering the sending of the first signal, and the first signal carrying the random access preamble sequence, wherein any one of the X1 candidate configurations is used for determining at least one cell, and the X1 candidate configurations respectively correspond to the X1 candidate values; when the value of the first field carried by the first PDCCH is equal to the value other than the X1 candidate values, the first signal is associated with the cell to which the first PDCCH belongs; and when the value of the first field carried by the first PDCCH is equal to one of the X1 candidate values, the value of the first field carried by the first PDCCH is used for determining the target configuration from the X1 candidate configurations, and the first signal is associated with at least one cell determined by the target configuration.

As one embodiment, the first node device 450 is one piece of user device (UE).

As one embodiment, the second node device 410 is one base station device (gNB/eNB).

As one embodiment, the receiving device 456 (comprising the antenna 460) and the receiving processor 452 are used for receiving the first PDCCH in the present application.

As one embodiment, the transmitting device 456 (comprising the antenna 460) and the transmitting processor 455 are used for sending the first signal in the present application.

As one embodiment, the receiving device 456 (comprising the antenna 460) and the receiving processor 452 are used for monitoring the second PDCCH in the present application.

As one embodiment, the transmitting device 456 (comprising the antenna 460), the transmitting processor 455, and the controller/processor 490 are used for sending the second information block in the present application.

As one embodiment, the receiving device 456 (comprising the antenna 460), the receiving processor 452, and the controller/processor 490 are used for receiving the first information block in the present application.

As one embodiment, the transmitting device 416 (comprising the antenna 420) and the transmitting processor 415 are used for sending the first PDCCH in the present application.

As one embodiment, the receiving device 416 (comprising the antenna 420) and the receiving processor 412 are used for receiving the first signal in the present application.

As one embodiment, the transmitting device 416 (comprising the antenna 420) and the transmitting processor 415 are used for sending the second PDCCH in the present application.

As one embodiment, the receiving device 416 (comprising the antenna 420), the receiving processor 412, and the controller/processor 440 are used for receiving the second information block in the present application.

## Embodiment 5

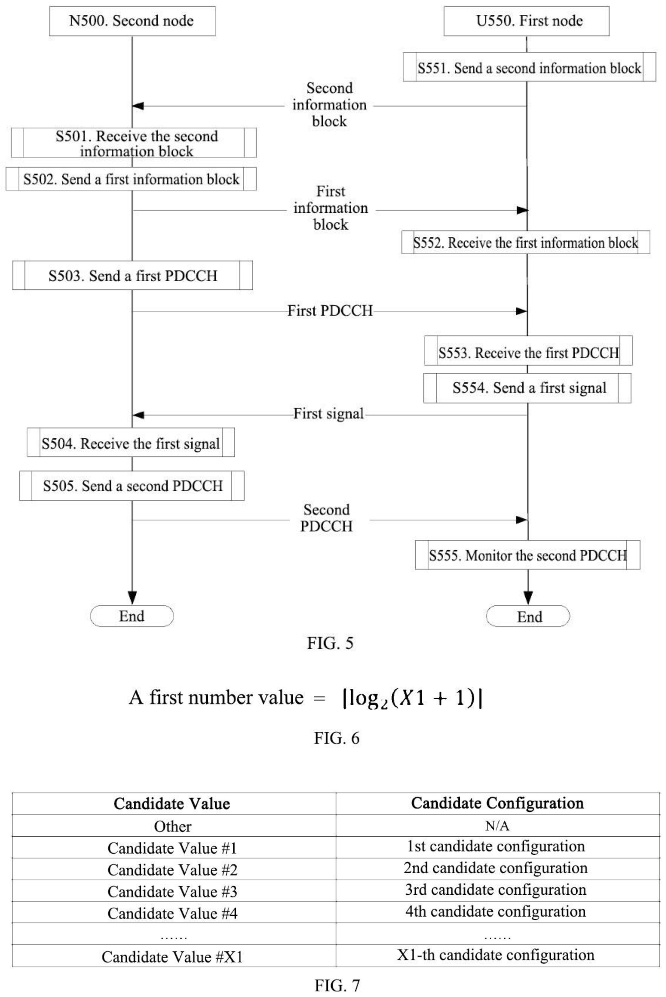

Embodiment 5 illustrates a flowchart of wireless signal transmission according to one embodiment of the present application, as shown in FIG. 5. In FIG. 5, a second node device N500 is a maintenance base station of a serving cell of a first node device U550. It is particularly noted that the order in this example does not limit the order of signal transmission and the order of implementation in the present application.

For **the second node device N500,** a second information block is received in step S501, a first information block is sent in step S502, a first PDCCH is sent in step S503, a first signal is received in step S504, and a second PDCCH is sent in step S505.

For **the first node device U550,** the second information block is sent in step S551, the first information block is received in step S552, the first PDCCH is received in step S553, the first signal is sent in step S554, and the second PDCCH is monitored in step S555.

In Embodiment 5, the first information block is used for determining X1 candidate configurations, and X1 is a positive integer; the first PDCCH carries a first field; the first PDCCH is used for triggering sending of the first signal, the first signal carrying a random access preamble sequence; any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration; the second information block is used for indicating at least one capability parameter of a sender of the second information block, and the second information block is used for determining that the first PDCCH carries the first field; a time interval length between the first PDCCH and the first signal in time domain is not less than a first threshold, and at least one of a relationship between a cell associated with the first signal and the cell to which the first PDCCH belongs or the second information block is used for determining the first threshold; the second PDCCH is used for responding to the first signal; and the value of the first field is used for determining at least one of a time length of a target time window or a start time of the target time window.

As one embodiment, the second information block is transmitted through an air interface or a wireless interface.

As one embodiment, the second information block comprises all or part of high-layer signalings or physical layer signalings.

As one embodiment, the second information block is earlier than the first information block.

As one embodiment, the second information block is later than the first information block.

As one embodiment, the second information block comprises all or part of RRC signalings, or the second information block comprises all or part of MAC layer signalings.

As one embodiment, the second information block is transmitted via a PUSCH or a PUCCH (Physical Uplink Control Channel).

As one embodiment, the second information block is used for indicating a capability of a first node device in the present application.

As one embodiment, a technical feature of "the second information block is used for indicating at least one capability parameter of a sender of the second information block" comprise s the following meaning: the second information block is used by the first node device in the present application for indicating at least one capability parameter of the first node device.

As one embodiment, the technical feature of "the second information block is used for indicating at least one capability parameter of a sender of the second information block" comprise s the following meaning: all or part of the second information block is used for explicitly or implicitly indicating at least one capability parameter of the sender of the second information block.

As one embodiment, the second information block comprises IE "BandCombinationList", or the second information block comprises IE "UE-NR-Capability", or the second information block comprises IE "RF-Parameters", or the second information block comprises IE "BandNR", or the second information block comprises IE "Phy-Parameters", or the second information block comprises IE "Phy-ParametersCommon", or the second information block comprises IE "Phy-ParametersCommon-v18a0".

As one embodiment, the second information block comprises a field "LTM-CFRA", or the second information block comprises a field "LTM-ServingCell", or the second information block comprises a field "LTM-nonServingCell", or the second information block comprises a field "LTM-nofCandidateCell", or the second information block comprises a field "LTM-noffargetCell".

As one embodiment, the second information block is used for indicating at least one capability parameter of the sender of the second information block, comprising at least one parameter in IE "Phy-ParametersFRX-Diff".

As one embodiment, the second information block is used for indicating at least one capability parameter of the sender of the second information block, comprising at least one parameter in a field "Phy-ParametersCommon".

As one embodiment, the second information block is used for indicating at least one capability parameter of the sender of the second information block, comprising at least one parameter in a field "BandNR".

As one embodiment, the second information block is used for indicating at least one capability parameter of the sender of the second information block, comprising at least one parameter in a field "BandCombinationList".

As one embodiment, the second information block is used for indicating at least one capability parameter of the sender of the second information block, comprising at least one parameter in a field "Phy-Parameters".

## Embodiment 6

Embodiment 6 illustrates a schematic diagram of a first number value according to one embodiment of the present application, as shown in FIG. 6. In FIG. 6, a reference value is equal to X1 plus 1.

In Embodiment 6, the first number value is equal to the number of bits comprised in a first field carried by a first PDCCH in the present application, the first number value is equal to a ceiling value of a logarithmic value of a base-2 reference value, and the reference value is equal to X1 plus 1.

As one embodiment, the number of bits comprised in the first field carried by the first PDCCH is a size of the first field carried by the first PDCCH.

As one embodiment, the number of bits comprised in the first field carried by the first PDCCH is the number of information bits comprised in the first field carried by the first PDCCH.

As one embodiment, the number of bits comprised in the first field carried by the first PDCCH is a total number of all bits comprised in the first field carried by the first PDCCH.

As one embodiment, the first number value is a positive integer.

As one embodiment, the first number value is equal to one of 1, 2, 3, or 4.

As one embodiment, the first number value is not greater than 8.

As one embodiment, the first number value is not greater than 4.

As one embodiment, the first number value is equal to one of 1, 2, or 3.

As one embodiment, the first number value is equal to one of 1 or 2.

As one embodiment, the first number value being equal to the ceiling value of the logarithmic value of the base-2 reference value is implemented by satisfying the following formula:

$$\text{the first number value} = \lceil \log_2 V_r \rceil$$

wherein $V_r$ represents the reference value.

As one embodiment, the first number value is implemented by satisfying: the first number

$$\text{value} = \lceil \log_2(X1 + 1) \rceil.$$

## Embodiment 7

Embodiment 7 illustrates a schematic diagram of a relationship between X1 candidate configurations and X1 candidate values according to one embodiment of the present application, as shown in FIG. 7. In FIG. 7, a column on the left represents a candidate value, a column on the right represents a candidate configuration, and the X1 candidate configurations are in one-to-one correspondence with the X1 candidate values.

In Embodiment 7, the X1 candidate configurations in the present application are used for configuring X1 identifiers, respectively, and the X1 candidate configurations are in one-to-one correspondence with the X1 candidate values in the present application in an order of the X1 identifiers in sequence. A target configuration in the present application is a candidate configuration corresponding to a value of the first field carried by the first PDCCH in the present application.

As one embodiment, the X1 candidate configurations are in one-to-one correspondence with the X1 candidate values in the order of the X1 identifiers, thereby improving the flexibility of signalings of the X1 candidate configurations.

As one embodiment, any one of the X1 identifiers is a non-negative integer.

As one embodiment, any one of the X1 identifiers is a cell identifier or a cell index.

As one embodiment, any one of the X1 identifiers is a configuration (or reconfiguration) identifier or a configuration (or reconfiguration) index.

As one embodiment, any one of the X1 identifiers is a physical cell identifier (PCID).

As one embodiment, any one of the X1 identifiers is a cell group identifier or a cell group index.

As one embodiment, any one of the X1 identifiers is an LTM cell configuration (or reconfiguration) identifier or an LTM cell configuration (or reconfiguration) index.

As one embodiment, any one of the X1 identifiers is a candidate (target) cell configuration (or reconfiguration) identifier or a candidate (or target) cell configuration (or reconfiguration) index.

As one embodiment, any one of the X1 identifiers is an LTM candidate (target) cell configuration (or reconfiguration) identifier or an LTM candidate (or target) cell configuration (or reconfiguration) index.

As one embodiment, any one of the X1 identifiers is an identifier or an index of a corresponding candidate configuration among the X1 candidate configurations.

As one embodiment, a technical feature of "the X1 candidate configurations are in one-to-one correspondence with the X1 candidate values in an order of the X1 identifiers" comprises the following meaning: the X1 candidate configurations are in one-to-one correspondence with the X1 candidate values in an ascending order of the X1 identifiers.

As one embodiment, the technical feature of "the X1 candidate configurations are in one-to-one correspondence with the X1 candidate values in an order of the X1 identifiers" comprises the following meaning: the X1 candidate configurations are in one-to-one correspondence with the X1 candidate values in a descending order of the X1 identifiers.

As one embodiment, the technical feature of "the X1 candidate configurations are in one-to-one correspondence with the X1 candidate values in an order of the X1 identifiers" comprises the following meanings: the X1 candidate configurations in the ascending order of the X1 identifiers are in one-to-one correspondence with the X1 candidate values in the ascending order.

As one embodiment, the technical feature of "the X1 candidate configurations are in one-to-one correspondence with the X1 candidate values in an order of the X1 identifiers" comprises the following meanings: the X1 candidate configurations in the ascending order of the X1 identifiers are in one-to-one correspondence with the X1 candidate values in the descending order.

As one embodiment, the technical feature of "the X1 candidate configurations are in one-to-one correspondence with the X1 candidate values in an order of the X1 identifiers" comprises the following meanings: the X1 candidate configurations in the descending order of the X1 identifiers are in one-to-one correspondence with the X1 candidate values in the ascending order.

As one embodiment, the technical feature of "the X1 candidate configurations are in one-to-one correspondence with the X1 candidate values in an order of the X1 identifiers" comprises the following meanings: the X1 candidate configurations in the descending order of the X1 identifiers are in one-to-one correspondence with the X1 candidate values in the descending order.

As one embodiment, the technical feature of "the X1 candidate configurations are in one-to-one correspondence with the X1 candidate values in an order of the X1 identifiers" comprises the following meanings: the X1 candidate values sequentially arranged or indexed in a given order, the X1 candidate configurations are sequentially arranged or indexed in an order of the X1 identifiers, and a candidate configuration corresponds to a candidate value that has the same arrangement position or the same index among the X1 candidate configurations and the X1 candidate values. As one dependent embodiment of the above embodiment, the given order is from small to large. As one dependent embodiment of the above embodiment, the given order is from large to small. As one dependent embodiment of the above embodiment, the given order is an ascending order. As one dependent embodiment of the above embodiment, the given order is a descending order. As one dependent embodiment of the above embodiment, the given order is the ascending or the descending order of integer values corresponding to the X1 candidate values, respectively. As one dependent embodiment of the above embodiment, the X1 candidate configurations are sequentially arranged or indexed in the ascending order of the X1 identifiers. As one dependent embodiment of the above embodiment, the X1 candidate configurations are sequentially arranged or indexed in the descending order of the X1 identifiers.

As one embodiment, an order or an index of the target configuration among the X1 candidate configurations is the same as an order or an index of the value of the first field carried by the first PDCCH among the X1 candidate values.

As one embodiment, the value of the first field carried by the first PDCCH is equal to a candidate value corresponding to the target configuration among the X1 candidate values.

## Embodiment 8

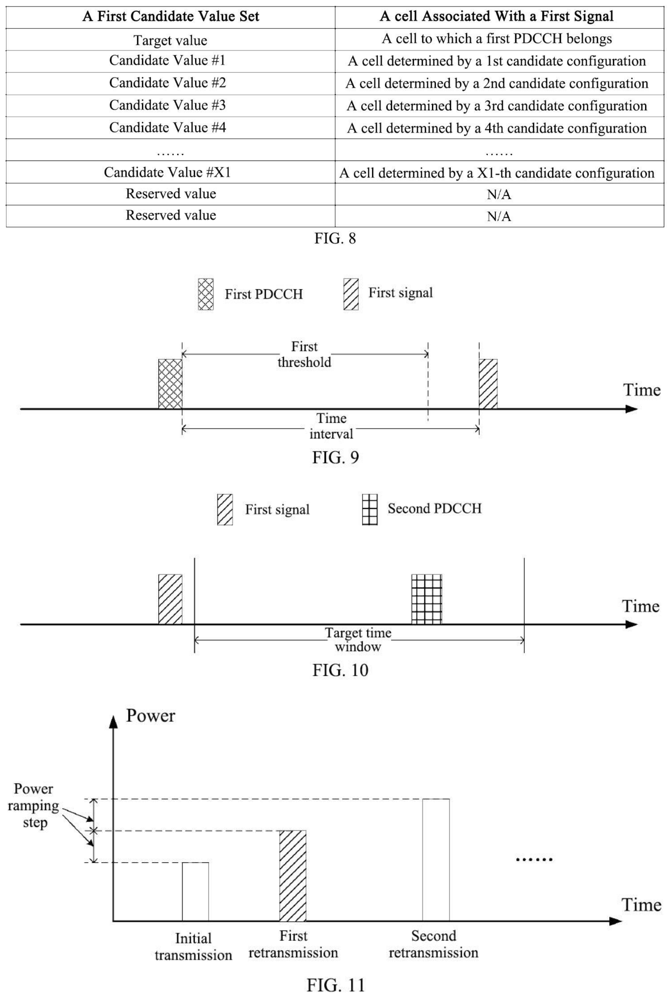

Embodiment 8 illustrates a schematic diagram of a first candidate value set according to one embodiment of the present application, as shown in FIG. 8. In FIG. 8, a column on the left represents the first candidate value set, and a column on the right represents a cell associated with a first signal.

In Embodiment 8, any one of X1 candidate values in the present application belongs to the first candidate value set, a value of a first field carried by a first PDCCH in the present application belongs to the first candidate value set, which comprises a plurality of candidate values; the first signal in the present application being associated with a cell to which the first PDCCH belongs depends on the value of the first field carried by the first PDCCH being equal to a target value; and the target value is one candidate value in the first candidate value set.

As one embodiment, introduction of the target value supports dynamic switching of sending of a PRACH between a source cell and a target cell (or a candidate cell), and signaling overhead is saved.

As one embodiment, any candidate value comprised in the first candidate value set is one possible value of the first field carried by the first PDCCH.

As one embodiment, any candidate value comprised in the first candidate value set is one possible state of the first field carried by the first PDCCH.

As one embodiment, any candidate value comprised in the first candidate value set is one candidate value or one candidate state of the first field carried by the first PDCCH.

As one embodiment, the first candidate value set comprises all possible values of the first field carried by the first PDCCH.

As one embodiment, the first candidate value set comprises all possible states of the first field carried by the first PDCCH.

As one embodiment, the first candidate value set comprises only part of possible values of the first field carried by the first PDCCH.

As one embodiment, the first candidate value set comprises only part of possible states of the first field carried by the first PDCCH.

As one embodiment, any candidate value comprised in the first candidate value set is a non-negative integer.

As one embodiment, any candidate value comprised in the first candidate value set is one state of a bitmap.

As one embodiment, any candidate value comprised in the first candidate value set is one value of a character string.

As one embodiment, the first candidate value set comprises at least one candidate value other than the X1 candidate values.

As one embodiment, the first candidate value set comprises one candidate value, which is different from any one of the X1 candidate values.

As one embodiment, N1 is equal to the number of bits comprised in the first field carried by the first PDCCH, and the number of candidate values comprised in the first candidate value set is equal to 2 to the power of N1.

As one embodiment, N1 is equal to the number of bits comprised in the first field carried by the first PDCCH, and the number of candidate values comprised in the first candidate value set is equal to 2 to the power of N1 plus 1.

As one embodiment, N1 is equal to the number of bits comprised in the first field carried by the first PDCCH, and the number of candidate values comprised in the first candidate value set is greater than 2 to the power of N1.

As one embodiment, N1 is equal to the number of bits comprised in the first field carried by the first PDCCH, and the number of candidate values comprised in the first candidate value set is less than 2 to the power of N1.

As one embodiment, the number of candidate values comprised in the first candidate value set is equal to 8.

As one embodiment, the number of candidate values comprised in the first candidate value set is equal to 4.

As one embodiment, the number of candidate values comprised in the first candidate value set is equal to 16.

As one embodiment, the number of candidate values comprised in the first candidate value set is equal to 32.

As one embodiment, a technical feature of "the first signal being associated with a cell to which the first PDCCH belongs depends on the value of the first field carried by the first PDCCH being equal to a target value" comprises the following meaning: the value of the first field carried by the first PDCCH being equal to the target value is used for determining that the first signal is associated with the cell to which the first PDCCH belongs.

As one embodiment, the technical feature of "the first signal being associated with a cell to which the first PDCCH belongs depends on the value of the first field carried by the first PDCCH being equal to the target value" comprises the following meaning: the value of the first field carried by the first PDCCH being equal to the target value is a condition under which the first signal is associated with the cell to which the first PDCCH belongs.

As one embodiment, the technical feature of "the first signal being associated with a cell to which the first PDCCH belongs depends on the value of the first field carried by the first PDCCH being equal to the target value" comprises the following meaning: the value of the first field carried by the first PDCCH being configured to be equal to the target value indicates that the first signal is associated with the cell to which the first PDCCH belongs.

As one embodiment, the technical feature of "the first signal being associated with a cell to which the first PDCCH belongs depends on the value of the first field carried by the first PDCCH being equal to the target value" comprises the following meaning: when the value of the first field carried by the first PDCCH is equal to the target value, the first signal is associated with the cell to which the first PDCCH belongs.

As one embodiment, the technical feature of "the first signal being associated with a cell to which the first PDCCH belongs depends on the value of the first field carried by the first PDCCH being equal to the target value" comprises the following meaning: when the value of the first field carried by the first PDCCH is equal to the target value, the first signal is associated with the cell to which the first PDCCH belongs; otherwise, the first signal is associated with at least one cell determined by a target configuration.

As one embodiment, the technical feature of "the first signal being associated with a cell to which the first PDCCH belongs depends on the value of the first field carried by the first PDCCH being equal to the target value" comprises the following meaning: when the value of the first field carried by the first PDCCH is equal to the target value, the first signal is associated with the cell to which the first PDCCH belongs; otherwise, the first signal is associated with a cell other than the cell to which the first PDCCH belongs.

As one embodiment, the technical feature of "the first signal being associated with a cell to which the first PDCCH belongs depends on the value of the first field carried by the first PDCCH being equal to the target value" comprises the following meaning: when the value of the first field carried by the first PDCCH is equal to the target value, the first signal is associated with the cell to which the first PDCCH belongs; otherwise, the first signal is associated with the cell other than the cell to which the first PDCCH belongs or is in a reserved state.

As one embodiment, the technical feature of "the first signal being associated with a cell to which the first PDCCH belongs depends on the value of the first field carried by the first PDCCH being equal to the target value" comprises the following meaning: when the value of the first field carried by the first PDCCH is equal to the target value, the first signal is associated with the cell to which the first PDCCH belongs; and when the value of the first field carried by the first PDCCH is equal to one of the X1 candidate values, the first signal is associated with at least one cell determined by the target configuration.

As one embodiment, the target value is a predefined candidate value in the first candidate value set.

As one embodiment, the target value is one configured candidate value in the first candidate value set.

As one embodiment, the target value is any candidate value other than the X1 candidate values in the first candidate value set.

As one embodiment, the target value is a minimum candidate value in the first candidate value set.

As one embodiment, the target value is a maximum candidate value in the first candidate value set.

As one embodiment, the target value is a candidate value in the first candidate value set that corresponds to all bits in the first field being set to "0".

As one embodiment, the target value is a candidate value in the first candidate value set that corresponds to all bits in the first field being set to "1".

As one embodiment, the target value is a candidate value in the first candidate value set that is 1 greater than the maximum candidate value among the X1 candidate values.

As one embodiment, the target value is a candidate value in the first candidate value set that is 1 smaller than the minimum candidate value among the X1 candidate values.

As one embodiment, the target value is equal to 0.

**Embodiment 9**

Embodiment 9 illustrates a schematic diagram of a relationship between a first PDCCH and a first signal according to one embodiment of the present application, as shown in FIG. 9. In FIG. 9, the horizontal axis represents time, the rectangular box filled with cross lines represents the first PDCCH, and the rectangular box filled with slash lines represents the first signal.

In Embodiment 9, a second information block in the present application is used for indicating at least one capability parameter of a sender of the second information block, and the second information block is used for determining that the first PDCCH in the present application carries a first field; and a time interval length between the first PDCCH and the first signal in the present application in time domain is not less than a first threshold, and at least one of a relationship between the cell associated with the first signal and a cell to which the first PDCCH belongs or the second information block is used for determining the first threshold.

As one embodiment, the first threshold is associated with the relationship between the cell associated with the first signal and the cell to which the first PDCCH belongs, which takes into account different delay requirements for different scenarios, reducing the complexity of product implementation.

As one embodiment, a technical feature of "the second information block is used for determining that the first PDCCH carries the first field" comprises the following meaning: the second information block is used by a recipient of the second information block for determining that the first PDCCH carries the first field.

As one embodiment, the technical feature of "the second information block is used for determining that the first PDCCH carries the first field" comprises the following meaning: all or part of the second information block is used for explicitly or implicitly indicating that the first PDCCH carries the first field.

As one embodiment, the technical feature of "the second information block is used for determining that the first PDCCH carries the first field" comprises the following meaning: all or part of the second information block is used for explicitly or implicitly indicating that the sender of the second information block has the ability to support a target characteristic, and the ability to support the target characteristic is used for determining that the first PDCCH carries the first field.

As one embodiment, the technical feature of "the second information block is used for determining that the first PDCCH carries the first field" comprises the following meaning: all or part of the second information block is used for explicitly or implicitly indicating that the sender of the second information block has the ability to support the first PDCCH carrying the first field.

As one embodiment, the technical feature of "the second information block is used for determining that the first PDCCH carries the first field" comprises the following meaning: all or part of the second information block is used for explicitly or implicitly indicating that the sender of the second information block has the ability to support the target characteristic; and only when the sender of the second information block has the ability to support the target characteristic, can a signaling configure the first PDCCH to carry the first field.

As one embodiment, the technical feature of "the second information block is used for determining that the first PDCCH carries the first field" comprises the following meaning: all or part of the second information block is used for explicitly or implicitly indicating that the sender of the second information block has the ability to support the target characteristic; only when the sender of the second information block has the ability to support the target characteristic, can the signaling configure the first PDCCH to carry the first field; otherwise, the signaling does not configure the first PDCCH to carry the first field.

As one embodiment, the technical feature of "the second information block is used for determining that the first PDCCH carries the first field" comprises the following meaning: when the second information block is not provided, the first PDCCH does not carry the first field; and when the second information block is provided, the first PDCCH carries the first field.

As one embodiment, the technical feature of "the second information block is used for determining that the first PDCCH carries the first field" comprises the following meaning: when the second information block is not provided, a first node device does not expect (or does not assume) that the first PDCCH carries the first field; and when the second information block is provided, the first node device expects (or assumes) that the first PDCCH carries the first field.

As one embodiment, the technical feature of "the second information block is used for determining that the first PDCCH carries the first field" comprises the following meaning: when the second information block is not provided, the first PDCCH does not carry the first field; and when the second information block is provided, the signaling configures the first PDCCH to carry the first field.

As one embodiment, the technical feature of "the second information block is used for determining that the first PDCCH carries the first field" comprises the following meaning: when the second information block is not provided, the first node device does not expect (or does not assume) that the first PDCCH carries the first field; when the second information block is provided and the signaling configures the first PDCCH to carry the first field, the first node device expects (or assumes) that the first PDCCH carries the first field; and when the second information block is provided and the signaling configures the first PDCCH to not carry the first field, the first node device does not expect (or does not assume) that the first PDCCH carries the first field.

As one embodiment, the technical feature of "the second information block is used for determining that the first PDCCH carries the first field" comprises the following meaning: all or part of the second information block is used for explicitly or implicitly indicating that the sender of the second information block has the ability to support an LTM; and the sender of the second information block having the ability to support the LTM is used for determining that the first PDCCH carries the first field.

As one embodiment, the technical feature of "the second information block is used for determining that the first PDCCH carries the first field" comprises the following meaning: all or part of the second information block is used for explicitly or implicitly indicating that the sender of the second information block has the ability to support an LTM of a non-serving cell; and the sender of the second information block having the ability to support the LTM of the non-serving cell is used for determining that the first PDCCH carries the first field.

As one embodiment, a latest symbol of reception of the first PDCCH is no later than an earliest symbol of transmission of the first signal.

As one embodiment, the latest symbol of reception of the first PDCCH is earlier than the earliest symbol of transmission of the first signal.

As one embodiment, the time interval length between the first PDCCH and the first signal in time domain is a time interval length between the latest symbol of reception of the first PDCCH and the earliest symbol of transmission of the first signal.

As one embodiment, the time interval length between the first PDCCH and the first signal in time domain is a time domain delay between the first PDCCH and the first signal.

As one embodiment, the time interval length between the first PDCCH and the first signal in time domain is a time interval length between an end time of the latest symbol of reception of the first PDCCH and a start time of the earliest symbol of transmission of the first signal.

As one embodiment, the time interval length between the first PDCCH and the first signal in time domain is a time interval length between a start time of the latest symbol of reception of the first PDCCH and a start time of the earliest symbol of transmission of the first signal.

As one embodiment, the time interval length between the first PDCCH and the first signal in time domain is a time interval length between an end time of the latest symbol of reception of the first PDCCH and an end time of the earliest symbol of transmission of the first signal.

As one embodiment, a unit of the time interval length between the first PDCCH and the first signal in time domain is milliseconds (ms).

As one embodiment, the time interval length between the first PDCCH and the first signal in time domain is represented by the number of symbols.

As one embodiment, the time interval length between the first PDCCH and the first signal in time domain is represented by an absolute time.

As one embodiment, the unit of the first threshold is milliseconds.

As one embodiment, the first threshold is represented by an absolute time.

As one embodiment, the first threshold is represented by the number of symbols.

As one embodiment, the time interval length between the first PDCCH and the first signal in time domain is greater than or equal to the first threshold.

As one embodiment, a relationship between the cell associated with the first signal and the cell to which the first PDCCH belongs comprises: whether the cell associated with the first signal is the same as the cell to which the first PDCCH belongs.

As one embodiment, the relationship between the cell associated with the first signal and the cell to which the first PDCCH belongs comprises: whether the cell associated with the first signal and the cell to which the first PDCCH belongs belong to the same cell group (CG).

As one embodiment, the relationship between the cell associated with the first signal and the cell to which the first PDCCH belongs comprises: whether the cell associated with the first signal and the cell to which the first PDCCH belongs belong to the same TAG (timing advance group).

As one embodiment, the relationship between the cell associated with the first signal and the cell to which the first PDCCH belongs comprises: whether the cell associated with the first signal and the cell to which the first PDCCH belongs are intra-frequency cells or inter-frequency cells.

As one embodiment, the relationship between the cell associated with the first signal and the cell to which the first PDCCH belongs comprises: whether the cell associated with the first signal and the cell to which the first PDCCH belongs are both serving cells.

As one embodiment, the relationship between the cell associated with the first signal and the cell to which the first PDCCH belongs comprises: whether the cell associated with the first signal and the cell to which the first PDCCH belongs are both active cells.

As one embodiment, the relationship between the cell associated with the first signal and the cell to which the first PDCCH belongs comprises: whether the cell associated with the first signal and the cell to which the first PDCCH belongs are in the same frequency range (FR).

As one embodiment, the relationship between the cell associated with the first signal and the cell to which the first PDCCH belongs comprises: whether the cell associated with the first signal and the cell to which the first PDCCH belongs adopt the same duplex mode.

As one embodiment, a technical feature of "at least one of a relationship between the cell associated with the first signal and a cell to which the first PDCCH belongs or the second information block is used for determining the first threshold" comprises the following meanings: the relationship between the cell associated with the first signal and the cell to which the first PDCCH belongs and the second information block are both used for determining the first threshold.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining the first threshold.

As one embodiment, the technical feature of "at least one of a relationship between the cell associated with the first signal and a cell to which the first PDCCH belongs or the second information block is used for determining the first threshold" comprises the following meaning: the second information block is used for determining the first threshold.

As one embodiment, the technical feature of "at least one of a relationship between the cell associated with the first signal and a cell to which the first PDCCH belongs or the second information block is used for determining the first threshold" comprises the following meaning: at least one of the relationship between the cell associated with the first signal and the cell to which the first PDCCH belongs or the second information block is used by the first node device in the present application for determining the first threshold.

As one embodiment, the technical feature of "at least one of a relationship between the cell associated with the first signal and a cell to which the first PDCCH belongs or the second information block is used for determining the first threshold" comprises the following meaning: at least one of the relationship between the cell associated with the first signal and the cell to which the first PDCCH belongs or the second information block is used for calculating the first threshold.

As one embodiment, the technical feature of "at least one of a relationship between the cell associated with the first signal and a cell to which the first PDCCH belongs or the second information block is used for determining the first threshold" comprises the following meaning: at least one of the relationship between the cell associated with the first signal and the cell to which the first PDCCH belongs or the second information block is used for determining a value of at least one component comprised in the first threshold.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining the value of one component comprised in the first threshold, and the second information block is used for determining a value of another component comprised in the first threshold.

As one embodiment, the technical feature of "at least one of a relationship between the cell associated with the first signal and a cell to which the first PDCCH belongs or the second information block is used for determining the first threshold" comprises the following meaning: the second information block is used for determining the value of at least one component comprised in the first threshold.

As one embodiment, the technical feature of "at least one of a relationship between the cell associated with the first signal and a cell to which the first PDCCH belongs or the second information block is used for determining the first threshold" comprises the following meaning: at least one of the relationship between the cell associated with the first signal and the cell to which the first PDCCH belongs or the second information block is used for determining a value of at least one parameter used when the first threshold is calculated.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining a value of another parameter used when the first threshold is calculated, and the second information block is used for determining a value of another parameter used for when the first threshold is calculated.

As one embodiment, the technical feature of "at least one of a relationship between the cell associated with the first signal and a cell to which the first PDCCH belongs or the second information block is used for determining the first threshold" comprises the following meaning: a target parameter value is used for determining the first threshold; when the relationship between the cell associated with the first signal and the cell to which the first PDCCH belongs is a first relationship, the target parameter value is equal to a first candidate value; and when the relationship between the cell associated with the first signal and the cell to which the first PDCCH belongs is a second relationship, the target parameter value is equal to a second candidate value.

- As one dependent embodiment of the above embodiment, the first candidate value and the second candidate value are not equal, the first candidate value is predefined, or is configurable, or is related to a capability of the first node device, and the second candidate value is predefined, or is configurable, or is related to the capability of the first node device.
- As one dependent embodiment of the above embodiment, "a target parameter value is used for determining the first threshold" comprises: the target parameter value is a value of one parameter used when the first threshold is calculated.
- As one dependent embodiment of the above embodiment, "a target parameter value is used for determining the first threshold" comprises: the first threshold is linearly correlated with the target parameter value.
- As one dependent embodiment of the above embodiment, the relationship between the cell associated with the first signal and the cell to which the first PDCCH belongs is only one of the first relationship or the second relationship.
- As one dependent embodiment of the above embodiment, the relationship between the cell associated with the first signal and the cell to which the first PDCCH belongs may also be a relationship other than the first relationship or the second relationship.
- As one dependent embodiment of the above embodiment, the first relationship and the second relationship are different.
- As one dependent embodiment of the above embodiment, the first relationship means that the cell associated with the first signal and the cell to which the first PDCCH belongs are the same; and the second relationship means that the cell associated with the first signal and the cell to which the first PDCCH belongs are different.
- As one dependent embodiment of the above embodiment, the first relationship means that the cell associated with the first signal and the cell to which the first PDCCH belongs are a secondary cell and a primary cell, respectively; and the second relationship means that the cell associated with the first signal is a non-serving cell, and the cell to which the first PDCCH belongs is a serving cell.
- As one dependent embodiment of the above embodiment, the first relationship means that the cell associated with the first signal and the cell to which the first PDCCH belongs belong to the same TAG; and the second relationship means that the cell associated with the first signal and the cell to which the first PDCCH belongs belong to different TAGs, respectively.
- As one dependent embodiment of the above embodiment, the first relationship means that the cell associated with the first signal and the cell to which the first PDCCH belongs are different, and the cell associated with the first signal and the cell to which the first PDCCH belongs are intra-frequency; and the second relationship means that the cell associated with the first signal and the cell to which the first PDCCH belongs are different, and the cell associated with the first signal and the cell to which the first PDCCH belongs are inter-frequency.
- As one dependent embodiment of the above embodiment, the first relationship means that the cell associated with the first signal and the cell to which the first PDCCH belongs are different, and the cell associated with the first signal and the cell to which the first PDCCH belongs belong to the same cell group; and the second relationship means that the cell associated with the first signal and the cell to which the first PDCCH belongs are different, and the cell associated with the first signal and the cell to which the first PDCCH belongs belong to different cell groups, respectively.
- As one dependent embodiment of the above embodiment, the first relationship means that the cell associated with the first signal and the cell to which the first PDCCH belongs belong to the same cell group, and the cell associated with the first signal and the cell to which the first PDCCH belongs are the secondary cell and the primary cell, respectively; and the second relationship means that the cell associated with the first signal and the cell to which the first PDCCH belongs belong to the same cell group, and the cell associated with the first signal is the non-serving cell, and the cell to which the first PDCCH belongs is the serving cell.

- As one dependent embodiment of the above embodiment, the first relationship means that the cell associated with the first signal and the cell to which the first PDCCH belongs are different, and the cell associated with the first signal and the cell to which the first PDCCH belongs belong to the same frequency range (FR); and the second relationship means that the cell associated with the first signal and the cell to which the first PDCCH belongs are different, and the cell associated with the first signal and the cell to which the first PDCCH belongs belong to different frequency ranges, respectively.

As one embodiment, the technical feature of "at least one of a relationship between the cell associated with the first signal and a cell to which the first PDCCH belongs or the second information block is used for determining the first threshold" comprises the following meaning: when the relationship between the cell associated with the first signal and the cell to which the first PDCCH belongs is the first relationship, the first threshold is equal to the first candidate value; and when the relationship between the cell associated with the first signal and the cell to which the first PDCCH belongs is the second relationship, the first threshold is equal to the sum (or difference) between the first candidate value and a first offset value.

- As one dependent embodiment of the above embodiment, the first candidate value is predefined, or is configurable, or is related to the capability of the first node device, and the first offset value is predefined, or is configurable, or is related to the capability of the first node device.
- As one dependent embodiment of the above embodiment, the relationship between the cell associated with the first signal and the cell to which the first PDCCH belongs is only one of the first relationship or the second relationship.
- As one dependent embodiment of the above embodiment, the relationship between the cell associated with the first signal and the cell to which the first PDCCH belongs may also be a relationship other than the first relationship or the second relationship.
- As one dependent embodiment of the above embodiment, the first relationship and the second relationship are different.
- As one dependent embodiment of the above embodiment, the first relationship means that the cell associated with the first signal and the cell to which the first PDCCH belongs are the same; and the second relationship means that the cell associated with the first signal and the cell to which the first PDCCH belongs are different.
- As one dependent embodiment of the above embodiment, the first relationship means that the cell associated with the first signal and the cell to which the first PDCCH belongs are the secondary cell and the primary cell, respectively; and the second relationship means that the cell associated with the first signal is the non-serving cell, and the cell to which the first PDCCH belongs is the serving cell.
- As one dependent embodiment of the above embodiment, the first relationship means that the cell associated with the first signal and the cell to which the first PDCCH belongs belong to the same TAG; and the second relationship means that the cell associated with the first signal and the cell to which the first PDCCH belongs belong to different TAGs, respectively.
- As one dependent embodiment of the above embodiment, the first relationship means that the cell associated with the first signal and the cell to which the first PDCCH belongs are different, and the cell associated with the first signal and the cell to which the first PDCCH belongs are intra-frequency; and the second relationship means that the cell associated with the first signal and the cell to which the first PDCCH belongs are different, and the cell associated with the first signal and the cell to which the first PDCCH belongs are inter-frequency.
- As one dependent embodiment of the above embodiment, the first relationship means that the cell associated with the first signal and the cell to which the first PDCCH belongs are different, and the cell associated with the first signal and the cell to which the first PDCCH belongs belong to the same cell group; and the second relationship means that the cell associated with the first signal and the cell to which the first PDCCH belongs are different, and the cell associated with the first signal and the cell to which the first PDCCH belongs belong to different cell groups, respectively.
- As one dependent embodiment of the above embodiment, the first relationship means that the cell associated with the first signal and the cell to which the first PDCCH belongs belong to the same cell group, and the cell associated with the first signal and the cell to which the first PDCCH belongs are the secondary cell and the primary cell, respectively; and the second relationship means that the cell associated with the first signal and the cell to which the first PDCCH belongs belong to the same cell group, and the cell associated with the first signal is the non-serving cell, and the cell to which the first PDCCH belongs is the serving cell.
- As one dependent embodiment of the above embodiment, the first relationship means that the cell associated with the first signal and the cell to which the first PDCCH belongs are different, and the cell associated with the first signal and the cell to which the first PDCCH belongs belong to the same frequency range (FR); and the second relationship means that the cell associated with the first signal and the cell to which the first PDCCH belongs are different, and the cell associated with the first signal and the cell to which the first PDCCH belongs belong to different frequency ranges, respectively.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs and the second information block are both used for determining a value of a parameter $N_{T,2}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the second information block is used for determining the value of the parameter $N_{T,2}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining a value of a parameter $\Delta_{BWPSwitching}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the second information block is used for determining the value of the parameter $\Delta_{BWPSwitching}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining a value of a parameter $\Delta_{Delay}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the second information block is used for determining the value of the parameter $\Delta_{Delay}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining a value of a parameter $T_{switch}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the second information block is used for determining the value of the parameter $T_{switch}$ used when the first threshold is calculated.

As one embodiment, the technical feature of "at least one of a relationship between the cell associated with the first signal and a cell to which the first PDCCH belongs or the second information block is used for determining the first threshold" comprises the following meaning: the relationship between the cell associated with the first signal and the cell to which the first PDCCH belongs is used for determining a value of a parameter $\Delta_{LTM}$ used when the first threshold is calculated, and the parameter $\Delta_{LTM}$ is a value of a parameter other than the parameter $N_{T,2}$, the parameter $\Delta_{BWPSwitching}$, the parameter $\Delta_{Delay}$, or the parameter $T_{switch}$.

As one embodiment, the technical feature of "at least one of a relationship between the cell associated with the first signal and a cell to which the first PDCCH belongs, or the second information block is used for determining the first threshold" comprises the following meaning: the second information block is used for determining the value of the parameter $\Delta_{LTM}$ used when the first threshold is calculated, and the parameter $\Delta_{LTM}$ is the value of the parameter other than the parameter $N_{T,2}$, the parameter $\Delta_{BWPSwitching}$, the parameter $\Delta_{Delay}$ or the parameter $T_{switch}$.

## Embodiment 10

Embodiment 10 illustrates a schematic diagram of a target time window according to one embodiment of the present application, as shown in FIG. 10. In FIG. 10, the horizontal axis represents time, the rectangular box filled with slash lines represents a first signal, the rectangular box filled with cross lines represents a second PDCCH, which belongs to the target time window in time domain.

In Embodiment 10, the second PDCCH in the present application is used for responding to the first signal in the present application; and a value of a first field in the present application is used for determining at least one of a time length of the target time window in the present application or a start time of the target time window.

As one embodiment, a random access response time window associated with the target time window and the cell to which a first PDCCH belongs are independently configured to meet the needs of different scenarios and improve flexibility.

As one embodiment, the target time window is the random access response window.

As one embodiment, the target time window is the random access response time window for a cell associated with the first signal.

As one embodiment, the target time window is an LTM response time window.

As one embodiment, the target time window is the LTM response time window for the cell associated with the first signal.

As one embodiment, the target time window is used for determining monitoring of the second PDCCH.

As one embodiment, time domain resources occupied by the second PDCCH belong to the target time window.

As one embodiment, the target time window comprises the time domain resources of the second PDCCH.

As one embodiment, a first node device assumes or expects the second PDCCH to be transmitted in the target time window.

As one embodiment, the monitoring of the second PDCCH is implemented by decoding of PDCCH candidates.

As one embodiment, the monitoring of the second PDCCH is implemented by blind decoding of the PDCCH candidates.

As one embodiment, the monitoring of the second PDCCH is implemented by decoding and a CRC of the PDCCH candidates.

As one embodiment, the monitoring of the second PDCCH is implemented by decoding of the PDCCH candidates and the CRC scrambled by an RNTI (Radio Network Temporary Identity).

As one embodiment, the monitoring of the second PDCCH is implemented based on decoding of the PDCCH candidates by one or more monitored DCI formats.

As one embodiment, the second PDCCH is a baseband signal or a radio frequency signal of a PDCCH.

As one embodiment, the second PDCCH is used for carrying (or transmitting) DCI.

As one embodiment, a DCI bit is used for generating the second PDCCH.

As one embodiment, the second PDCCH carries the DCI adopting a DCI format 1_0.

As one embodiment, the second PDCCH carries the DCI adopting a DCI format 1_1.

As one embodiment, the second PDCCH carries the DCI adopting a DCI format 1_2.

As one embodiment, the second PDCCH carries the DCI adopting a DCI format 2_k, wherein k is a non-negative integer.

As one embodiment, the CRC of the second PDCCH is scrambled by a C-RNTI.

As one embodiment, the CRC in a DCI format adopted by DCI carried by the second PDCCH is scrambled by the C-RNTI.

As one embodiment, the CRC of the second PDCCH is scrambled by an RA-RNTI (Random Access Radio Network Temporary Identifier).

As one embodiment, the CRC in the DCI format adopted by the DCI carried by the second PDCCH is scrambled by the RA-RNTI.

As one embodiment, the CRC of the second PDCCH is scrambled by an LTM-RNTI.

As one embodiment, the CRC in the DCI format adopted by the DCI carried by the second PDCCH is scrambled by the LTM-RNTI.

As one embodiment, the CRC of the second PDCCH is scrambled by a target RNTI, which is signaling-configured. As one dependent embodiment of the above embodiment, the target RNTI is signaling-configured for an RRC (radio resource control) layer. As one dependent embodiment of the above embodiment, the target RNTI is signaling-configured for an MAC (medium access control) layer. As one dependent embodiment of the above embodiments, the target RNTI is signaling-configured to configure (or trigger) an LTM. As one dependent embodiment of the above embodiment, the target RNTI is signaling-configured for the cell associated with the first signal. As one dependent embodiment of the above embodiment, the target RNTI is signaling-configured to configure (or trigger) the LTM for the cell associated with the first signal. As one dependent embodiment of the above embodiment, the target RNTI is a UE-specific signaling-configured.

As one embodiment, the CRC in the DCI format adopted by the DCI carried by the second PDCCH is scrambled by the target RNTI, which is signaling-configured. As one dependent embodiment of the above embodiment, the target RNTI is signaling-configure d for the RRC (radio resource control) layer. As one dependent embodiment of the above embodiment, the target RNTI is signaling-configured for the MAC (medium access control) layer. As one dependent embodiment of the above embodiments, the target RNTI is signaling-configured to configure (or trigger) the LTM. As one dependent embodiment of the above embodiment, the target RNTI is signaling-configured for the cell associated with the first signal. As one dependent embodiment of the above embodiment, the target RNTI is signaling-configured to configure (or trigger) the LTM for the cell associated with the first signal. As one dependent embodiment of the above embodiment, the target RNTI is the UE-specific signaling-configured.

As one embodiment, at least one fixed (or predefined) field comprised in the DCI carried by the second PDCCH is set to a predefined value.

As one embodiment, a frequency domain resource assignment field comprised in the DCI carried by the second PDCCH is equal to all "1".

As one embodiment, the PDCCH candidates occupied by the second PDCCH belong to a common search space set.

As one embodiment, the PDCCH candidates occupied by the second PDCCH belong to a common search space set of a type 1.

As one embodiment, the PDCCH candidates occupied by the second PDCCH belong to a common search space set of a type 1A.

As one embodiment, the PDCCH candidates occupied by the second PDCCH belong to a common search space set of a type 1B.

As one embodiment, the PDCCH candidates occupied by the second PDCCH belong to a UE-specific search space set.

As one embodiment, a search space set to which the PDCCH candidates occupied by the second PDCCH belong exclusively occupies one CORESET (control resource set).

As one embodiment, the search space set to which the PDCCH candidates occupied by the second PDCCH belong exclusively occupies one CORESET (control resource set) within the target time window.

As one embodiment, the search space set to which the PDCCH candidates occupied by the second PDCCH belong is not associated with the same CORESET as other search space sets.

As one embodiment, the search space set to which the PDCCH candidates occupied by the second PDCCH belong is not associated with the same CORESET as another search space sets within the target time window.

As one embodiment, the search space set to which the PDCCH candidates occupied by the second PDCCH belong is signaling-configure d.

As one embodiment, a first search space set is the search space set to which the PDCCH candidates occupied by the second PDCCH belong, and the first node device does not expect to monitor a PDCCH belonging to another search space set in a CORESET associated with the first search space set.

As one embodiment, the first search space set is the search space set to which the PDCCH candidates occupied by the second PDCCH belong, and the first node device does not expect a complete or partial overlapping in time domain between another search space set associated with the same CORESET as the first search space set and the first search space set.

As one embodiment, the first search space set is the search space set to which the PDCCH candidates occupied by the second PDCCH belong, and the first node device does not expect a complete or partial overlapping of monitoring occasions (MOs) in time domain between another search space set associated with the same CORESET as the first search space set and the first search space set.

As one embodiment, the first search space set is the search space set to which the PDCCH candidates occupied by the second PDCCH belong, and the first node device does not expect to monitor a PDCCH belonging to another search space set in the CORESET associated with the first search space set within the target time window.

As one embodiment, the first search space set is the search space set to which the PDCCH candidates occupied by the second PDCCH belong, and the first node device does not expect a complete or partial overlapping in time domain between another search space set associated with the same CORESET as the first search space set and the first search space set within the target time window.

As one embodiment, the first search space set is the search space set to which the PDCCH candidates occupied by the second PDCCH belong, and the first node device does not expect a complete or partial overlapping of the monitoring occasions (MOs) in time domain between another search space set associated with the same CORESET as the first search space set and the first search space set within the target time window.

As one embodiment, the first PDCCH and the second PDCCH belong to the same cell.

As one embodiment, the first PDCCH and the second PDCCH respectively belong to different cells.

As one embodiment, the second PDCCH belongs to the cell associated with the first signal.

As one embodiment, a technical feature of "the second PDCCH is used for responding to the first signal" comprises the following meaning: the second PDCCH is used by a sender of the second PDCCH to respond to the first signal.

As one embodiment, the technical feature of "the second PDCCH is used for responding to the first signal" comprises the following meaning: a signal or a channel in response to the first signal comprises the second PDCCH.

As one embodiment, the technical feature of "the second PDCCH is used for responding to the first signal" comprises the following meaning: the second PDCCH is sent for the first signal.

As one embodiment, the technical feature of "the second PDCCH is used for responding to the first signal" comprises the following meaning: the first signal triggers transmission of the second PDCCH.

As one embodiment, the technical feature of "the second PDCCH is used for responding to the first signal" comprises the following meaning: the first signal is used for determining the start time of the target time window.

As one embodiment, the technical feature of "the second PDCCH is used for responding to the first signal" comprises the following meaning: the first signal is used for determining time - frequency resources occupied by the second PDCCH.

As one embodiment, the technical feature of "the second PDCCH is used for responding to the first signal" comprises the following meaning: the first signal is used for determining a cell to which the second PDCCH belongs.

As one embodiment, the technical feature of "the second PDCCH is used for responding to the first signal" comprises the following meaning: the first signal is used for determining a time window to which the second PDCCH belongs in time domain.

As one embodiment, the technical feature of "the second PDCCH is used for responding to the first signal" comprises the following meaning: the first signal is used for determining a CORESET to which the second PDCCH belongs.

As one embodiment, the technical feature of "the second PDCCH is used for responding to the first signal" comprises the following meaning: the first signal is used for determining the cell to which the second PDCCH belongs, and the cell to which the second PDCCH belongs is used for determining the CORESET to which the second PDCCH belongs.

As one embodiment, the technical feature of "the second PDCCH is used for responding to the first signal" comprises the following meaning: the first signal is used for determining a type or a value of an RNTI carried by the second PDCCH.

As one embodiment, the technical feature of "the second PDCCH is used for responding to the first signal" comprises the following meaning: the first signal and the second PDCCH belong to the same random access procedure.

As one embodiment, the technical feature of "the second PDCCH is used for responding to the first signal" comprises the following meaning: the second PDCCH belongs to the random access procedure initiated or triggered by the first signal.

As one embodiment, the technical feature of "the second PDCCH is used for responding to the first signal" comprises the following meaning: the first signal and the second PDCCH belong to the same LTM procedure.

As one embodiment, the technical feature of "the second PDCCH is used for responding to the first signal" comprises the following meaning: the second PDCCH belongs to the LTM procedure initiated or triggered by the first signal.

As one embodiment, the technical feature of "the second PDCCH is used for responding to the first signal" comprises the following meaning: the second PDCCH is later than the first signal in time domain.

As one embodiment, the technical feature of "the second PDCCH is used for responding to the first signal" comprises the following meaning: the second PDCCH is an earliest PDCCH in time domain that is at least a first time length later than the first signal and carries a timing advance value for the cell associated with the first signal, and the first time length is predefined, or is configurable, or is related to a capability of the first node device.

As one embodiment, the technical feature of "the second PDCCH is used for responding to the first signal" comprises the following meaning: the second PDCCH is a latest PDCCH in time domain that is at least the first time length later than the first signal and carries the timing advance value for the cell associated with the first signal, and the first time length is predefined, or is configurable, or is related to the capability of the first node device.

As one embodiment, the technical feature of "the second PDCCH is used for responding to the first signal" comprises the following meaning: the second PDCCH is a PDCCH, among all earliest PDCCHs in time domain that are at least the first time length later than the first signal and carry the timing advance value for the cell associated with the first signal, whose CORESET has a minimum or maximum index, and the first time length is predefined, or is configurable, or is related to the capability of the first node device.

As one embodiment, the technical feature of "the second PDCCH is used for responding to the first signal" comprises the following meaning: the second PDCCH is a PDCCH, among all latest PDCCHs in time domain that are at least the first time length later than the first signal and carry the timing advance value for the cell associated with the first signal, whose CORESET has a minimum or maximum index, and the first time length is predefined, or is configurable, or is related to the capability of the first node device.

As one embodiment, the technical feature of "the second PDCCH is used for responding to the first signal" comprises the following meaning: a target PDSCH (physical downlink shared channel) is an earliest PDSCH in time domain that is at least a second time length later than the first signal and carries a timing advance value for the cell associated with the first signal, the second PDCCH is a PDCCH used for scheduling the target PDSCH, and the second time length is predefined, or is configurable, or is related to the capability of the first node device.

As one embodiment, the technical feature of "the second PDCCH is used for responding to the first signal" comprises the following meaning: the target PDSCH is a latest PDSCH in time domain that is at least the second time length later than the first signal and carries the timing advance value for the cell associated with the first signal, the second PDCCH is the PDCCH used for scheduling the target PDSCH, and the second time length is predefined, or is configurable, or is related to the capability of the first node device.

As one embodiment, the technical feature of "the second PDCCH is used for responding to the first signal" comprises the following meaning: the target PDSCH is a PDSCH, among all earliest PDSCHs in time domain that are at least the second time length later than the first signal and carry the timing advance value for the cell associated with the first signal, whose scheduling PDCCH belongs to a CORESET having a minimum or maximum index, the second PDCCH is a PDCCH used for scheduling the target PDSCH, and the second time length is predefined, or is configurable, or is related to the capability of the first node device.

As one embodiment, the technical feature of "the second PDCCH is used for responding to the first signal" comprises the following meaning: the target PDSCH is a PDSCH, among all latest PDSCHs in time domain that are at least the second time length later than the first signal and carry the timing advance value for the cell associated with the first signal, whose scheduling PDCCH belongs to the CORESET having a minimum or maximum index, the second PDCCH is the PDCCH used for scheduling the target PDSCH, and the second time length is predefined, or is configurable, or is related to the capability of the first node device.

As one embodiment, the technical feature of "the second PDCCH is used for responding to the first signal" comprises the following meaning: the second PDCCH is at least a third time length later than the first signal in time domain, a PDSCH scheduled by the second PDCCH is the earliest PDSCH that carries the timing advance value for the cell associated with the first signal, and the third time length is predefined, or is configurable, or is related to the capability of the first node device.

As one embodiment, the technical feature of "the second PDCCH is used for responding to the first signal" comprises the following meaning: the second PDCCH is at least the third time length later than the first signal in time domain, the PDSCH scheduled by the second PDCCH is the latest PDSCH that carries the timing advance value for the cell associated with the first signal, and the third time length is predefined, or is configurable, or is related to the capability of the first node device.

As one embodiment, the technical feature of "the second PDCCH is used for responding to the first signal" comprises the following meaning: the second PDCCH is at least the third time length later than the first signal in time domain, the second PDCCH is a PDCCH, among all scheduling PDCCHs for at least one earliest PDSCH that carries the timing advance value for the cell associated with the first signal, whose CORESET has a minimum or maximum index, and the third time length is predefined, or is configurable, or is related to the capability of the first node device.

As one embodiment, the technical feature of "the second PDCCH is used for responding to the first signal" comprises the following meaning: the second PDCCH is at least the third time length later than the first signal in time domain, the second PDCCH is a PDCCH, among all scheduling PDCCHs for at least one latest PDSCH that carries the timing advance value for the cell associated with the first signal, whose CORESET has a minimum or maximum index, and the third time length is predefined, or is configurable, or is related to the capability of the first node device.

As one embodiment, the second PDCCH is detected within the target time window to be used for considering that a procedure to which the first signal belongs is completed.

As one embodiment, the second PDCCH is detected within the target time window to be used for considering that the procedure to which the first signal belongs is successful.

As one embodiment, a time length of the target time window is represented by the number of time slots.

As one embodiment, the time length of the target time window is an absolute time length.

As one embodiment, a unit of the time length of the target time window is milliseconds.

As one embodiment, the time length of the target time window is represented by the number of symbols.

As one embodiment, the time length of the target time window is represented by the number of subframes.

As one embodiment, the time length of the target time window is represented by the number of time slots corresponding to a subcarrier spacing of subcarriers occupied by the second PDCCH in frequency domain.

As one embodiment, the time length of the target time window is represented by the number of time slots corresponding to a subcarrier spacing of a BWP in the cell associated with the first signal.

As one embodiment, the start time of the target time window is a position of a start symbol comprised in the target time window.

As one embodiment, the start time of the target time window is the time interval length between the start symbol comprised in the target time window and the first signal.

As one embodiment, the start time of the target time window is a minimum value of the time interval length between the start symbol comprised in the target time window and the first signal.

As one embodiment, a technical feature of "the value of the first field is used for determining at least one of a time length of the target time window or a start time of the target time window" comprises the following meaning: the value of the first field is used by the first node device in the present application for determining at least one of the time length of the target time window or the start time of the target time window.

As one embodiment, the technical feature of "the value of the first field is used for determining at least one of a time length of the target time window or a start time of the target time window" comprises the following meaning: the value of the first field is used for determining the time length of the target time window and the start time of the target time window.

As one embodiment, the technical feature of "the value of the first field is used for determining at least one of a time length of the target time window or a start time of the target time window" comprises the following meaning: the value of the first field is used for determining the time length of the target time window.

As one embodiment, the technical feature of "the value of the first field is used for determining at least one of a time length of the target time window or a start time of the target time window" comprises the following meaning: the value of the first field is used for determining the start time of the target time window.

As one embodiment, the technical feature of "the value of the first field is used for determining at least one of a time length of the target time window or a start time of the target time window" comprises the following meaning: the value of the first field is used for explicitly or implicitly indicating at least one of the time length of the target time window or the start time of the target time window.

As one embodiment, the technical feature of "the value of the first field is used for determining at least one of a time length of the target time window or a start time of the target time window" comprises the following meaning: the cell associated with the first signal is used for determining at least one of the time length of the target time window or the start time of the target time window.

As one embodiment, the technical feature of "the value of the first field is used for determining at least one of a time length of the target time window or a start time of the target time window" comprises the following meaning: a target configuration is used for determining at least one of the time length of the target time window or the start time of the target time window.

As one embodiment, the technical feature of "the value of the first field is used for determining at least one of a time length of the target time window or a start time of the target time window" comprises the following meaning: X1 candidate configurations are used for determining X1 candidate lengths and X1 candidate delay lengths, respectively, and a signaling for the cell to which the first PDCCH belongs is used for determining a first candidate length; when a value of the first field carried by the first PDCCH is equal to a value other than X1 candidate values, the time length of the target time window is equal to the first candidate length, and the start time of the target time window is an earliest symbol of an earliest CORESET associated with a PDCCH common search space set of a type 1, which is at least one symbol apart from a latest symbol in a PRACH occasion occupied by the first signal; and when the value of the first field carried by the first PDCCH is equal to one of the X1 candidate values, the time length of the target time window is equal to a candidate length determined by the target configuration among the X1 candidate lengths, the start time of the target time window is the earliest symbol of the earliest CORESET associated with the PDCCH common search space set of the type 1, which is at least S1 symbols apart from the latest symbol in the PRACH occasion occupied by the first signal, and S1 is equal to a candidate delay length determined by the target configuration among the X1 candidate delay lengths.

As one embodiment, the technical feature of "the value of the first field is used for determining at least one of a time length of the target time window or a start time of the target time window" comprises the following meaning: the X1 candidate configurations are used for determining the X1 candidate lengths and the X1 candidate delay lengths, respectively, and the signaling for the cell to which the first PDCCH belongs is used for determining the first candidate length; when the first signal is associated with the cell to which the first PDCCH belongs, the time length of the target time window is equal to the first candidate length, and the start time of the target time window is the earliest symbol of the earliest CORESET associated with the PDCCH common search space set of the type 1, which is at least one symbol apart from the latest symbol in the PRACH occasion occupied by the first signal; and when the first signal is associated with at least one cell determined by the target configuration, the time length of the target time window is equal to the candidate length determined by the target configuration among the X1 candidate lengths, the start time of the target time window is the earliest symbol of the earliest CORESET associated with the PDCCH common search space set of the type 1, which is at least S1 symbols apart from the latest symbol in the PRACH occasion occupied by the first signal, and S1 is equal to the candidate delay length determined by the target configuration among the X1 candidate delay lengths.

As one embodiment, the technical feature of "the value of the first field is used for determining at least one of a time length of the target time window or a start time of the target time window" comprises the following meaning: the X1 candidate configurations are respectively used for determining the X1 candidate lengths, and the signaling for the cell to which the first PDCCH belongs is used for determining the first candidate length, and the start time of the target time window is the earliest symbol of the earliest CORESET associated with the PDCCH common search space set of the type 1, which is at least one symbol apart from the latest symbol in the PRACH occasion occupied by the first signal; when the value of the first field carried by the first PDCCH is equal to the value other than the X1 candidate values, the time length of the target time window is equal to the first candidate length; and when the value of the first field carried by the first PDCCH is equal to one of the X1 candidate values, the time length of the target time window is equal to the candidate length determined by the target configuration among the X1 candidate lengths.

As one embodiment, the technical feature of "the value of the first field is used for determining at least one of a time length of the target time window or a start time of the target time window" comprises the following meaning: the X1 candidate configurations are respectively used for determining the X1 candidate lengths, and the signaling for the cell to which the first PDCCH belongs is used for determining the first candidate length, and the start time of the target time window is the earliest symbol of the earliest CORESET associated with the PDCCH common search space set of the type 1, which is at least one symbol apart from the latest symbol in the PRACH occasion occupied by the first signal; when the first signal is associated with the cell to which the first PDCCH belongs, the time length of the target time window is equal to the first candidate length; and when the first signal is associated with at least one cell determined by the target configuration, the time length of the target time window is equal to the candidate length determined by the target configuration among the X1 candidate lengths.

As one embodiment, the technical feature of "the value of the first field is used for determining at least one of a time length of the target time window or a start time of the target time window" comprises the following meaning: the X1 candidate configurations are respectively used for determining the X1 candidate delay lengths, and the signaling for the cell to which the first PDCCH belongs is used for determining the first candidate length, and the time length of the target time window is equal to the first candidate length; when the value of the first field carried by the first PDCCH is equal to the value other than the X1 candidate values, the start time of the target time window is the earliest symbol of the earliest CORESET associated with the PDCCH common search space set of the type 1, which is at least one symbol apart from the latest symbol in the PRACH occasion occupied by the first signal; and when the value of the first field carried by the first PDCCH is equal to one of the X1 candidate values, the start time of the target time window is the earliest symbol of the earliest CORESET associated with the PDCCH common search space set of the type 1, which is at least S1 symbols apart from the latest symbol in the PRACH occasion occupied by the first signal, and S1 is equal to the candidate delay length determined by the target configuration among the X1 candidate delay lengths.

As one embodiment, the technical feature of "the value of the first field is used for determining at least one of a time length of the target time window or a start time of the target time window" comprises the following meaning: the X1 candidate configurations are respectively used for determining the X1 candidate delay lengths, and the signaling for the cell to which the first PDCCH belongs is used for determining the first candidate length, and the time length of the target time window is equal to the first candidate length; when the first signal is associated with the cell to which the first PDCCH belongs, the start time of the target time window is the earliest symbol of the earliest CORESET associated with the PDCCH common search space set of the type 1, which is at least one symbol apart from the latest symbol in the PRACH occasion occupied by the first signal; and when the first signal is associated with at least one cell determined by the target configuration, the start time of the target time window is the earliest symbol of the earliest CORESET associated with the PDCCH common search space set of the type 1, which is at least S1 symbols apart from the latest symbol in the PRACH occasion occupied by the first signal., and S1 is equal to the candidate delay length determined by the target configuration among the X1 candidate delay lengths.

### Embodiment 11

Embodiment 11 illustrates a schematic diagram of a power ramping step according to one embodiment of the present application, as shown in FIG. 11. In FIG. 11, the horizontal axis represents time, the vertical axis represents power, each rectangular box represents a transmission of a random access channel, the rectangular box filled with slash lines represents a first signal, and the power ramping step is used for determining a power ramping amplitude between two transmissions.

In Embodiment 11, a first information block in the present application is used for determining the power ramping step, a first PDCCH in the present application is used for determining a first count value, and the power ramping step and the first count value are together used for determining a transmit power value of the first signal in the present application.

As one embodiment, by using the first PDCCH to determine the first count value, UE can accurately set the transmit power value of the first signal, ensuring the detection performance of the first signal.

As one embodiment, when the first signal is associated with at least one cell determined by a target configuration, the power ramping step and the first count value are together used for determining the transmit power value of the first signal.

As one embodiment, when a value of a first field carried by the first PDCCH is equal to one of X1 candidate values, the power ramping step and the first count value are together used for determining the transmit power value of the first signal.

As one embodiment, a unit of the power ramping step is dB.

As one embodiment, the unit of the power ramping step is milliwatts (mW).

As one embodiment, the unit of the power ramping step is dBm.

As one embodiment, the power ramping step is a non-negative integer.

As one embodiment, the power ramping step is not less than 0.

As one embodiment, the power ramping step is equal to one of 0dB, 2dB, 4dB, or 6dB.

As one embodiment, the power ramping step is a power-ramping factor.

As one embodiment, the power ramping step is a value of power adjustment (or change) when a PRACH (or preamble) is resent.

As one embodiment, the power ramping step is equal to a power ramping step of a PRACH configured for a cell to which the first PDCCH belongs.

As one embodiment, the power ramping step is equal to a power ramping step of a dedicated PRACH configured for the cell to which the first PDCCH belongs.

As one embodiment, the power ramping step is equal to a power ramping step of a cell-specific or common PRACH configured for the cell to which the first PDCCH belongs.

As one embodiment, the power ramping step is independent of the power ramping step of the PRACH configured for the cell to which the first PDCCH belongs.

As one embodiment, the power ramping step and the power ramping step of the PRACH configured for the cell to which the first PDCCH belongs are configured by two fields or two IE, respectively.

As one embodiment, the power ramping step and the power ramping step of the PRACH configured for the cell to which the first PDCCH belongs are independent.

As one embodiment, the power ramping step is equal to the power ramping step of the PRACH configured for a cell associated with the first signal.

As one embodiment, the power ramping step is equal to a power ramping step of a PRACH configured for a cell other than the cell to which the first PDCCH belongs.

As one embodiment, a technical feature of "a first information block is used for determining the power ramping step" comprises the following meaning: the first information block is used by a first node device in the present application for determining the power ramping step.

As one embodiment, the technical feature of "a first information block is used for determining the power ramping step" comprises the following meaning: all or part of the first information block is used for explicitly or implicitly indicating the power ramping step.

As one embodiment, the technical feature of "a first information block is used for determining the power ramping step" comprises the following meaning: the first information block and at least one parameter other than parameters comprised in the first information block are together used for determining the power ramping step.

As one embodiment, the technical feature of "a first information block is used for determining the power ramping step" comprises the following meaning: all or part of the first information block is used for explicitly or implicitly indicating a candidate power ramping step, the power ramping step is equal to a product of the candidate power ramping step and a spreading factor, and the spreading factor is predefined or configured.

As one embodiment, the first count value is a non-negative integer.

As one embodiment, the first count value is a positive integer.

As one embodiment, the first count value does not exceed a maximum number of retransmissions of a PRACH (or preamble) for one cell.

As one embodiment, a maximum value of the first count value does not exceed 3.

As one embodiment, the maximum value of the first count value does not exceed 7.

As one embodiment, the maximum value of the first count value does not exceed 15.

As one embodiment, the first count value is used for retransmission counting of a PRACH (or a preamble).

As one embodiment, the first count value is used for determining a retransmission sequence number of a PRACH (or a preamble).

As one embodiment, the first count value is used for retransmission counting of the PRACH (or preamble) for one cell.

As one embodiment, the first count value is used for retransmission counting of the PRACH (or the preamble) for the cell associated with the first signal.

As one embodiment, the first count value is used for retransmission counting of the PRACH (or the preamble) for one cell in an LTM.

As one embodiment, a technical feature of "a first PDCCH is used for determining a first count value" comprises the following meaning: the first PDCCH is used by the first node device in the present application for determining the first count value.

As one embodiment, the technical feature of "a first PDCCH is used for determining a first count value" comprises the following meaning: all or part of DCI carried by the first PDCCH is used for explicitly or implicitly indicating the first count value.

As one embodiment, the technical feature of "a first PDCCH is used for determining a first count value" comprises the following meaning: at least one field in the DCI carried by the first PDCCH is used for explicitly or implicitly indicating the first count value.

As one embodiment, a technical feature of "the power ramping step and the first count value are together used for determining the transmit power value of the first signal" comprises the following meaning: the power ramping step and the first count value are together used by the first node device in the present application for determining the transmit power value of the first signal.

As one embodiment, the technical feature of "the power ramping step and the first count value are together used for determining the transmit power value of the first signal" comprises the following meaning: the power ramping step and the first count value are together used for calculating the transmit power value of the first signal.

As one embodiment, the technical feature of "the power ramping step and the first count value are together used for determining the transmit power value of the first signal" comprises the following meaning: a product of the power ramping step and the first count value is used for calculating the transmit power value of the first signal.

As one embodiment, the technical feature of "the power ramping step and the first count value are together used for determining the transmit power value of the first signal" comprises the following meaning: a product of the power ramping step and a difference of the first count value minus 1 is used for calculating the transmit power value of the first signal.

As one embodiment, the technical feature of "the power ramping step and the first count value are together used for determining the transmit power value of the first signal" comprises the following meaning: the transmit power value of the first signal is equal to a smaller value between a first upper limit value and a first power value, the first upper limit value is a maximum output power at which the first node device is configured, and the first power value is linearly related to a product value of the power ramping step and the different of the first count value minus 1.

As one embodiment, the technical feature of "the power ramping step and the first count value are together used for determining the transmit power value of the first signal" comprises the following meaning: the transmit power value of the first signal is equal to the smaller value between the first upper limit value and the first power value, the first upper limit value is the maximum output power at which the first node device is configured, and the first power value is linearly related to the product value of the power ramping step and the first count value.

As one embodiment, the unit of the transmit power value of the first signal is dBm.

As one embodiment, the unit of the transmit power value of the first signal is mW.

As one embodiment, the transmit power value of the first signal is not greater than the maximum output power value at which the first node device is configured in the cell associated with the first signal.

As one embodiment, the transmit power value of the first signal is not greater than the maximum output power value at which the first node device is configured in the cell to which the first PDCCH belongs.

As one embodiment, the transmit power value of the first signal is not greater than a smaller value between a maximum output power value at which the first node device is configure d in the cell associated with the first signal or a maximum output power value at which the first node device is configured in the cell to which the first PDCCH belongs.

As one embodiment, the technical feature of "the power ramping step and the first count value are together used for determining the transmit power value of the first signal" is implemented by satisfying the following formula:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{\mathrm{PRACH},b,f,c}(i)$ represents the transmit power value of the first signal, $P_{\mathrm{CMAX},f,c}(i)$ represents the maximum output power value at which the first node device is configured, $PL_{b,f,c}$ represents a path loss in an uplink BWP $b$ on a carrier $f$ of a cell $c$ associated with the first signal, and $P_{\mathrm{PRACH,target},f,c}$ is equal to a sum of configured preamble receive target power and the product value of the power ramping step and the difference of the first count value minus 1.

As one embodiment, the technical feature of "the power ramping step and the first count value are together used for determining the transmit power value of the first signal" is implemented by satisfying the following formula:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{\mathrm{PRACH},b,f,c}(i)$ represents the transmit power value of the first signal, $P_{\mathrm{CMAX},f,c}(i)$ represents the maximum output power value at which the first node device is configured, $PL_{b,f,c}$ represents the path loss in the uplink BWP $b$ on the carrier $f$ of the cell $c$ associated with the first signal, and $P_{\mathrm{PRACH,target},f,c}$ is equal to the sum of configured preamble receive target power and the product value of the power ramping step and the first count value.

As one embodiment, the technical feature of "the power ramping step and the first count value are together used for determining the transmit power value of the first signal" is implemented by satisfying the following formula:

$$P_{\mathrm{PRACH},b,f,c}(i) = \min\{P_{\mathrm{CMAX},f,c}(i), P_{\mathrm{PRACH,target},f,c} + PL_{b,f,c}\}[\mathrm{dBm}]$$

wherein $P_{PRACH,b,f,c}(i)$ represents the transmit power value of the first signal, $P_{CMAX,f,c}(i)$ represents the maximum output power value at which the first node device is configured, $PL_{b,f,c}$ represents the path loss in the uplink BWP $b$ on the carrier $f$ of the cell $c$ associated with the first signal, and $P_{PRACH,target,f,c}$ is equal to the sum of configured preamble receive target power, the product value of the power ramping step and the difference of the first count value minus 1, and one configured power offset value.

## Embodiment 12

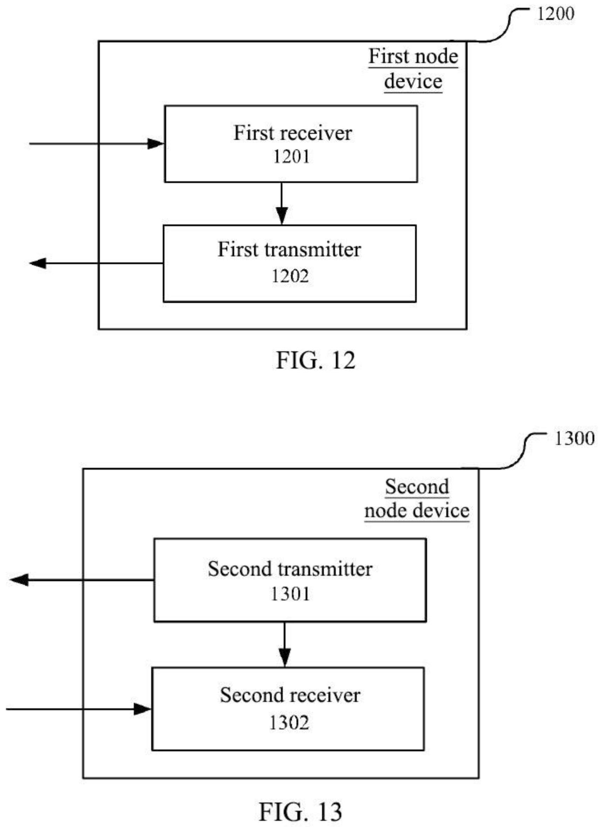

Embodiment 12 illustrates a structural block diagram of a processing apparatus in a first node device according to one embodiment, as shown in FIG. 12. In FIG. 12, a processing apparatus 1200 of the first node device comprises a first receiver 1201 and a first transmitter 1202. The first receiver 1201 comprises a transmitting device/receiving device 456 (comprising an antenna 460), a receiving processor 452, and a controller/processor 490 in FIG. 4 of the present application; and the first transmitter 1202 comprises the transmitting device/receiving device 456 (comprising the antenna 460), a transmitting processor 455, and the controller/processor 490 in FIG. 4 of the present application.

In Embodiment 12, the first receiver 1201 receives a first information block, which is used for determining X1 candidate configurations, X1 being a positive integer; the first receiver 1201 receives a first PDCCH, which carries a first field; and the first transmitter 1202 sends a first signal, the first PDCCH is used for triggering sending of the first signal, and the first signal carrying a random access preamble sequence, wherein any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

As one embodiment, a first number value is equal to the number of bits comprised in the first field carried by the first PDCCH, the first number value is equal to a ceiling value of a logarithmic value of a base-2 reference value, and the reference value is equal to X1 plus 1.

As one embodiment, the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

As one embodiment, any one of the X1 candidate values belongs to a first candidate value set, the value of the first field carried by the first PDCCH belongs to the first candidate value set, which comprises a plurality of candidate values; the first signal being associated with the cell to which the first PDCCH belongs depends on the value of the first field carried by the first PDCCH being equal to a target value; and the target value is one candidate value in the first candidate value set.

As one embodiment, the first transmitter 1202 sends a second information block, wherein the second information block is used for indicating at least one capability parameter of a sender of the second information block, and the second information block is used for determining that the first PDCCH carries the first field; and a time interval length between the first PDCCH and the first signal in time domain is not less than a first threshold, and at least one of a relationship between a cell associated with the first signal and the cell to which the first PDCCH belongs or the second information block is used for determining the first threshold.

As one embodiment, the first receiver 1201 monitors a second PDCCH in a target time window, wherein the second PDCCH is used for responding to the first signal; and a value of the first field is used for determining at least one of a time length of the target time window or a start time of the target time window.

As one embodiment, the first information block is used for determining a power ramping step, the first PDCCH is used for determining a first count value, and the power ramping step and the first count value are together used for determining a transmit power value of the first signal.

## Embodiment 13

Embodiment 13 illustrates a structural block diagram of a processing apparatus in a second node device according to one embodiment, as shown in FIG. 13. In FIG. 13, a processing apparatus 1300 of the second node device comprises a second transmitter 1301 and a second receiver 1302. The second transmitter 1301 comprises a transmitting device/receiving device 416 (comprising an antenna 460), a transmitting processor 415, and a controller/processor 440 in FIG. 4 of the present application; and the second receiver 1302 comprises the transmitting device/receiving device 416 (comprising the antenna 460), a receiving processor 412, and the controller/processor 440 in FIG. 4 of the present application.

In Embodiment 13, the second transmitter 1301 sends a first information block, which is used for determining X1 candidate configurations, X1 being a positive integer; the second transmitter 1301 sends a first PDCCH, which carries a first field; the second receiver 1302 receives a first signal, the first PDCCH being used for triggering sending of the first signal, and the first signal carrying a random access preamble sequence; any one of the X1 candidate configurations is used for determining at least one cell, and the X1 candidate configurations respectively correspond to X1 candidate values; when a value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, and the first signal is associated with at least one cell determined by the target configuration.

As one embodiment, a first number value is equal to the number of bits comprised in the first field carried by the first PDCCH, the first number value is equal to a ceiling value of a logarithmic value of a base-2 reference value, and the reference value is equal to X1 plus 1.

As one embodiment, the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

As one embodiment, any one of the X1 candidate values belongs to a first candidate value set, the value of the first field carried by the first PDCCH belongs to the first candidate value set, which comprises a plurality of candidate values; the first signal being associated with the cell to which the first PDCCH belongs depends on the value of the first field carried by the first PDCCH being equal to a target value; and the target value is one candidate value in the first candidate value set.

As one embodiment, the second receiver 1302 receives a second information block, wherein the second information block is used for indicating at least one capability parameter of a sender of the second information block, and the second information block is used for determining that the first PDCCH carries the first field; and a time interval length between the first PDCCH and the first signal in time domain is not less than a first threshold, and at least one of a relationship between a cell associated with the first signal and the cell to which the first PDCCH belongs or the second information block is used for determining the first threshold.

As one embodiment, the second transmitter 1301 sends a second PDCCH in a target time window, wherein the second PDCCH is used for responding to the first signal; and a value of the first field is used for determining at least one of a time length of the target time window or a start time of the target time window.

As one embodiment, the first information block is used for determining a power ramping step, the first PDCCH is used for determining a first count value, and the power ramping step and the first count value are together used for determining a transmit power value of the first signal.

Those skilled in the art will appreciate that all or part of the steps in the above method may be implemented by instructing relevant hardware by a program, and the program can be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. A first node device, or a second node device, or UE, or a terminal in the present application includes but is not limited to mobile phones, tablet computers, laptops, network cards, low-power devices, eMTC devices, NB-IoT devices, vehicular communication devices, aircrafts, airplanes, drones, remote-controlled airplanes, and other wireless communication devices. A base station device, or a base station, or a network-side device in the present application includes but is not limited to macro cellular base stations, micro cellular base stations, femtocells, relay base stations, eNBs, gNBs, transmitter receiver points (TRPs), relay satellites, satellite base stations, air base stations, and other wireless communication devices.

Those skilled in the art will appreciate that the present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are all considered to have been comprised therein.

**Claims**

1. A first node device for wireless communication, comprising:

   a first receiver receiving a first information block, which is used for determining X1 candidate configurations, X1 being a positive integer,
   wherein the first receiver receives a first PDCCH, which carries a first field, the first PDCCH carries all or part of fields in a DCI format 1_0, and a value of a frequency domain resource assignment field comprised in DCI carried by the first PDCCH is equal to all "1"; and

a first transmitter sending a first signal, the first PDCCH being used for triggering sending of the first signal, and the first signal carrying a random access preamble sequence,

wherein any one of the X1 candidate configurations is used for determining at least one cell, any cell determined by any one of the X1 candidate configurations is a candidate cell, and the X1 candidate configurations correspond to X1 candidate values, respectively; when the value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, the first signal is associated with at least one cell determined by the target configuration, and the first signal is used for obtaining timing advance of at least one cell determined for the target configuration.

2. The first node device according to claim 1, wherein a first number value is equal to the number of bits comprised in the first field carried by the first PDCCH, the first number value is equal to a ceiling value of a logarithmic value of a base-2 reference value, and the reference value is equal to X1 plus 1.

3. The first node device according to claim 2, wherein the first number value is not greater than 4, and the first number value satisfies: the first number $\text{value} = \lceil \log_2(X1 + 1) \rceil$.

4. The first node device according to any one of claims 1 to 3, wherein the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

5. The first node device according to claim 4, wherein the X1 candidate configurations are in one-to-one correspondence with the X1 candidate values in an ascending order of the X1 identifiers; and an order of the target configuration among the X1 candidate configurations is the same as an order of the value of the first field carried by the first PDCCH among the X1 candidate values.

6. The first node device according to any one of claims 1 to 5, wherein any one of the X1 candidate values belongs to a first candidate value set, the value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

7. The first node device according to claim 6, wherein when the value of the first field carried by the first PDCCH is equal to the target value, the first signal is associated with the cell to which the first PDCCH belongs; when the value of the first field carried by the first PDCCH is equal to one of the X1 candidate values, the first signal is associated with at least one cell determined by the target configuration; and the target value is equal to 0.

8. The first node device according to any one of claims 1 to 7, wherein the first transmitter sends a second information block, wherein the second information block is used for indicating at least one capability parameter of a sender of the second information block, and the second information block is used for determining that the first PDCCH carries the first field; a time interval length between the first PDCCH and the first signal in time domain is not less than a first threshold, the time interval length between the first PDCCH and the first signal in time domain is a time interval length between a latest symbol of reception of the first PDCCH and an earliest symbol of transmission of the first signal, and a unit of the first threshold is millisecond; and at least one of a relationship between the cell associated with the first signal and the cell to which the first PDCCH belongs or the second information block is used for determining the first threshold.

9. The first node device according to claim 8, wherein the first threshold is linearly correlated with a target parameter value; when the relationship between the cell associated with the first signal and the cell to which the first PDCCH belongs is a first relationship, the target parameter value is equal to a first candidate value; when the relationship between the cell associated with the first signal and the cell to which the first PDCCH belongs is a second relationship, the target parameter value is equal to a second candidate value; and the first candidate value and the second candidate value are not equal, the first candidate value is predefined, the second candidate value is predefined, or is configurable, or is related to a capability of a sender of the first signal.

10. The first node device according to claim 8 or 9, wherein the relationship between the cell associated with the first signal and the cell to which the first PDCCH belongs is used for determining a value of a parameter $\Delta_{BWPSwitching}$ used when the first threshold is calculated; and the relationship between the cell associated with the first signal and the cell to which the first PDCCH belongs is used for determining a value of a parameter $\Delta_{LTM}$ used when the first threshold is calculated, the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

11. The first node device according to claim 8 or 9, wherein the second information block is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

12. The first node device according to any one of claims 1 to 11, wherein any one of the X1 candidate configurations comprises at least a physical cell identifier, and an upper limit value of X1 is equal to 8; and the target configuration is a candidate configuration corresponding to the value of the first field carried by the first PDCCH among the X1 candidate configurations.

13. The first node device according to any one of claims 1 to 12, wherein the first information block is used for determining a power ramping step, the first PDCCH is used for determining a first count value, the power ramping step and the first count value are together used for determining a transmit power value of the first signal, and the power ramping step is equal to one of 0dB, 2dB, 4dB, or 6dB.

14. The first node device according to claim 13, wherein the power ramping step is equal to a power ramping step of a PRACH configured for a cell other than the cell to which the first PDCCH belongs, and the transmit power value of the first signal is not greater than a maximum output power value at which the sender of the first signal is configured in the cell associated with the first signal.

15. The first node device according to claim 13 or 14, wherein the transmit power value of the first signal is equal to a smaller value between a first upper limit value and a first power value, the first upper limit value is a maximum output power at which the sender of the first signal is configured, and the first power value is linearly related to a product value of the power ramping step and a difference of the first count value minus 1.

16. The first node device according to any one of claims 1 to 15, wherein the first information block comprises IE "RRCReconfiguration", the first information block comprises all or part of IE "LTM_Config-r18", the first information block comprises all or part of IE "RACH-ConfigGeneric", and the first information block comprises a field "power-RampingStep"; and the first information block comprises X1 sub-information blocks, which are used for determining the X1 candidate configurations, respectively.

17. The first node device according to any one of claims 1 to 16, wherein the first signal is a PRACH, and the first signal is used for a random access procedure and an LTM procedure; and the cell associated with the first signal is a cell in which a corresponding index value or identifier value and time-frequency resources and/or sequences occupied by the first signal are all configured or indicated in the first PDCCH.

18. The first node device according to any one of claims 1 to 17, wherein one cell determined by one of the X1 candidate configurations is a serving cell of the first node device, and one cell determined by one of the X1 candidate configurations is a non-serving cell of the first node device; and the X1 candidate configurations comprise one reference candidate configuration, and at least one candidate configuration other than the reference candidate configuration among the X1 candidate configurations comprises a difference value with the reference candidate configuration.

19. The first node device according to any one of claims 1 to 18, wherein the first information block is used for determining that at least one reserved bit in the DCI carried by the first PDCCH is used as the first field; and when the first information block is not provided, the number of bits comprised in the first field carried by the first PDCCH is equal to 0.

20. The first node device according to any one of claims 1 to 19, wherein the first signal being associated with the cell to which the first PDCCH belongs comprises: the time-frequency resources and/or sequences occupied by the first signal and the index value associated with the cell to which the first PDCCH belongs are configured or indicated in the same PDCCHorder; and the first signal being associated with the at least one cell determined by the target configuration comprises: configuration information of the first signal and an index (or identifier) of the at least one cell determined by the target configuration are configured in the same IE or field.

21. A second node device for wireless communication, comprising:

a second transmitter sending a first information block, which is used for determining X1 candidate configurations, X1 being a positive integer,

wherein the second transmitter sends a first PDCCH, which carries a first field, the first PDCCH carries all or part of fields in a DCI format 1_0, and a value of a frequency domain resource assignment field comprised in DCI carried by the first PDCCH is equal to all "1"; and

a second receiver receiving a first signal, the first PDCCH being used for triggering sending of the first signal, and the first signal carrying a random access preamble sequence,

wherein any one of the X1 candidate configurations is used for determining at least one cell, any cell determined by any one of the X1 candidate configurations is a candidate cell, and the X1 candidate configurations correspond to X1 candidate values, respectively; when the value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, the first signal is associated with at least one cell determined by the target configuration, and the first signal is used for obtaining timing advance of at least one cell determined for the target configuration.

22. The second node device according to claim 21, wherein a first number value is equal to the number of bits comprised in the first field carried by the first PDCCH, the first number value is equal to a ceiling value of a logarithmic value of a base-2 reference value, and the reference value is equal to X1 plus 1.

23. The second node device according to claim 22, wherein the first number value is not greater than 4, and the first number value satisfies: the first number $value = \lceil \log_2(X1 + 1) \rceil$.

24. The second node device according to any one of claims 21 to 23, wherein the X1 canidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

25. The second node device according to claim 24, wherein the X1 candidate configurations are in one-to-one correspondence with the X1 candidate values in an ascending order of the X1 identifiers; and an order of the target configuration among the X1 candidate configurations is the same as an order of the value of the first field carried by the first PDCCH among the X1 candidate values.

26. The second node device according to any one of claims 21 to 25, wherein any one of the X1 candidate values belongs to a first candidate value set, the value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

27. The second node device according to claim 26, wherein when the value of the first field carried by the first PDCCH is equal to the target value, the first signal is associated with the cell to which the first PDCCH belongs; when the value of the first field carried by the first PDCCH is equal to one of the X1 candidate values, the first signal is associated with at least one cell determined by the target configuration; and the target value is equal to 0.

28. The second node device according to any one of claims 21 to 27, wherein the second receiver receives a second information block, wherein the second information block is used for indicating at least one capability parameter of a sender of the second information block, and the second information block is used for determining that the first PDCCH carries the first field; a time interval length between the first PDCCH and the first signal in time domain is not less than a first threshold, the time interval length between the first PDCCH and the first signal in time domain is a time interval length between a latest symbol of reception of the first PDCCH and an earliest symbol of transmission of the first signal, and a unit of the first threshold is millisecond; and at least one of a relationship between the cell associated with the first signal and the cell to which the first PDCCH belongs or the second information block is used for determining the first threshold.

29. The second node device according to claim 28, wherein the first threshold is linearly correlated with a target parameter value; when the relationship between the cell associated with the first signal and the cell to which the first PDCCH belongs is a first relationship, the target parameter value is equal to a first candidate value; when the relationship between the cell associated with the first signal and the cell to which the first PDCCH belongs is a second relationship, the target parameter value is equal to a second candidate value; and the first candidate value and the second candidate value are not equal, the first candidate value is predefined, the second candidate value is predefined, or is configurable, or is related to a capability of a sender of the first signal.

30. The second node device according to claim 28 or 29, wherein the relationship between the cell associated with the first signal and the cell to which the first PDCCH belongs is used for determining a value of a parameter $\Delta_{BWPSwitching}$ used when the first threshold is calculated; and the relationship between the cell associated with the first signal and the cell to which the first PDCCH belongs is used for determining a value of a parameter $\Delta_{LTM}$ used when the first threshold is calculated, the parameter $\Delta_{LTM}$ is a value of a parameter other than a parameter $N_{T,2}$, a parameter $\Delta_{SWPSwitching}$, a parameter $\Delta_{Delay}$, or a parameter $T_{switch}$.

31. The second node device according to claim 28 or 29, wherein the second information block is used for determining a value of a parameter $\Delta_{LTM}$ used when the first threshold is calculated, and the parameter $\Delta_{LTM}$ is a value of a parameter other than a parameter $N_{T,2}$, a parameter $\Delta_{BWPSwitching}$, a parameter $\Delta_{Delay}$, or a parameter $T_{switch}$.

32. The second node device according to any one of claims 21 to 31, wherein any one of the X1 candidate configurations comprises at least a physical cell identifier, and an upper limit value of X1 is equal to 8; and the target configuration is a candidate configuration corresponding to the value of the first field carried by the first PDCCH among the X1 candidate configurations.

33. The second node device according to any one of claims 21 to 32, wherein the first information block is used for determining a power ramping step, the first PDCCH is used for determining a first count value, the power ramping step and the first count value are together used for determining a transmit power value of the first signal, and the power ramping step is equal to one of 0dB, 2dB, 4dB, or 6dB.

34. The second node device according to claim 33, wherein the power ramping step is equal to a power ramping step of a PRACH configured for a cell other than the cell to which the first PDCCH belongs, and the transmit power value of the first signal is not greater than a maximum output power value at which the sender of the first signal is configured in the cell associated with the first signal.

35. The second node device according to claim 33 or 34, wherein the transmit power value of the first signal is equal to a smaller value between a first upper limit value and a first power value, the first upper limit value is a maximum output power at which the sender of the first signal is configured, and the first power value is linearly related to a product value of the power ramping step and a difference of the first count value minus 1.

36. The second node device according to any one of claims 21 to 35, wherein the first information block comprises IE "RRCReconfiguration", the first information block comprises all or part of IE "LTM_Config-r18", the first information block comprises all or part of IE "RACH-ConfigGeneric", and the first information block comprises a field "power-RampingStep"; and the first information block comprises X1 sub-information blocks, which are used for determining the X1 candidate configurations, respectively.

37. The second node device according to any one of claims 21 to 36, wherein the first signal is a PRACH, and the first signal is used for a random access procedure and an LTM procedure; and the cell associated with the first signal is a cell in which a corresponding index value or identifier value and time-frequency resources and/or sequences occupied by the first signal are all configured or indicated in the first PDCCH.

38. The second node device according to any one of claims 21 to 37, wherein one cell determined by one of the X1 candidate configurations is a serving cell of the first node device, and one cell determined by one of the X1 candidate configurations is a non-serving cell of the first node device; and the X1 candidate configurations comprise one reference candidate configuration, and at least one candidate configuration other than the reference candidate configuration among the X1 candidate configurations comprises a difference value with the reference candidate

42

configuration.

39. The second node device according to any one of claims 21 to 38, wherein the first information block is used for determining that at least one reserved bit in the DCI carried by the first PDCCH is used as the first field; and when the first information block is not provided, the number of bits comprised in the first field carried by the first PDCCH is equal to 0.

40. The second node device according to any one of claims 21 to 39, wherein the first signal being associated with the cell to which the first PDCCH belongs comprises: the time-frequency resources and/or sequences occupied by the first signal and the index value associated with the cell to which the first PDCCH belongs are configured or indicated in the same PDCCH order; and the first signal being associated with the at least one cell determined by the target configuration comprises: configuration information of the first signal and an index (or identifier) of the at least one cell determined by the target configuration are configured in the same IE or field.

41. A method used in a first node for wireless communication, comprising:

receiving a first information block, which is used for determining X1 candidate configurations, X1 being a positive integer;
receiving a first PDCCH, which carries a first field, the first PDCCH carrying all or part of fields in a DCIformat 1_0, and a value of a frequency domain resource assignment field comprised in DCI carried by the first PDCCH being equal to all "1"; and
sending a first signal, the first PDCCH being used for triggering sending of the first signal, and the first signal carrying a random access preamble sequence,
wherein any one of the X1 candidate configurations is used for determining at least one cell, any cell determined by any one of the X1 candidate configurations is a candidate cell, and the X1 candidate configurations correspond to X1 candidate values, respectively; when the value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, the first signal is associated with at least one cell determined by the target configuration, and the first signal is used for obtaining timing advance of at least one cell determined for the target configuration.

42. The method used in a first node according to claim 41, wherein a first number value is equal to the number of bits comprised in the first field carried by the first PDCCH, the first number value is equal to a ceiling value of a logarithmic value of a base-2 reference value, and the reference value is equal to X1 plus 1.

43. The method used in a first node according to claim 42, wherein the first number value is not greater than 4, and the first number value satisfies: the first number $\text{value} = \lceil \log_2(X1 + 1) \rceil$.

44. The method used in a first node according to any one of claims 41 to 43, wherein the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

45. The method used in a first node according to claim 44, wherein the X1 candidate configurations are in one-to-one correspondence with the X1 candidate values in an ascending order of the X1 identifiers; and an order of the target configuration among the X1 candidate configurations is the same as an order of the value of the first field carried by the first PDCCH among the X1 candidate values.

46. The method used in a first node according to any one of claims 41 to 45, wherein any one of the X1 candidate values belongs to a first candidate value set, the value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

47. The method used in a first node according to claim 46, wherein when the value of the first field carried by the first PDCCH is equal to the target value, the first signal is associated with the cell to which the first PDCCH belongs; when the value of the first field carried by the first PDCCH is equal to one of the X1 candidate values, the first signal is associated with at least one cell determined by the target configuration; and the target value is equal to 0.

48. The method used in a first node according to any one of claims 41 to 47, comprising:

sending a second information block,
wherein the second information block is used for indicating at least one capability parameter of a sender of the second information block, and the second information block is used for determining that the first PDCCH carries the first field; a time interval length between the first PDCCH and the first signal in time domain is not less than a first threshold, the time interval length between the first PDCCH and the first signal in time domain is a time interval length between a latest symbol of reception of the first PDCCH and an earliest symbol of transmission of the first signal, and a unit of the first threshold is millisecond; and at least one of a relationship between the cell associated with the first signal and the cell to which the first PDCCH belongs or the second information block is used for determining the first threshold.

49. The method used in a first node according to claim 48, wherein the first threshold is linearly correlated with a target parameter value; when the relationship between the cell associated with the first signal and the cell to which the first PDCCH belongs is a first relationship, the target parameter value is equal to a first candidate value; when the relationship between the cell associated with the first signal and the cell to which the first PDCCH belongs is a second relationship, the target parameter value is equal to a second candidate value; and the first candidate value and the second candidate value are not equal, the first candidate value is predefined, the second candidate value is predefined, or is configurable, or is related to a capability of a sender of the first signal.

50. The method used in a first node according to claim 48 or 49, wherein the relationship between the cell associated with the first signal and the cell to which the first PDCCH belongs is used for determining a value of a parameter $\Delta_{\text{BWPSwitching}}$ used when the first threshold is calculated; and the relationship between the cell associated with the first signal and the cell to which the first PDCCH belongs is used for determining a value of a parameter $\Delta_{\text{LTM}}$ used when the first threshold is calculated, the parameter $\Delta_{\text{LTM}}$ is a value of a parameter other than a parameter $N_{T,2}$, a parameter $\Delta_{\text{BWPSwitching}}$, a parameter $\Delta_{\text{Delay}}$, or a parameter $T_{\text{switch}}$.

51. The method used in a first node according to claim 48 or 49, wherein the second information block is used for determining a value of a parameter $\Delta_{\text{LTM}}$ used when the first threshold is calculated, and the parameter $\Delta_{\text{LTM}}$ is a value of a parameter other than a parameter $N_{T,2}$, a parameter $\Delta_{\text{BWPSwitching}}$, a parameter $\Delta_{\text{Delay}}$, or a parameter $T_{\text{switch}}$.

52. The method used in a first node according to any one of claims 41 to 51, wherein any one of the X1 candidate configurations comprises at least a physical cell identifier, and an upper limit value of X1 is equal to 8; and the target configuration is a candidate configuration corresponding to the value of the first field carried by the first PDCCH among the X1 candidate configurations.

53. The method used in a first node according to any one of claims 41 to 52, wherein the first information block is used for determining a power ramping step, the first PDCCH is used for determining a first count value, the power ramping step and the first count value are together used for determining a transmit power value of the first signal, and the power ramping step is equal to one of 0dB, 2dB, 4dB, or 6dB.

54. The method used in a first node according to claim 53, wherein the power ramping step is equal to a power ramping step of a PRACH configured for a cell other than the cell to which the first PDCCH belongs, and the transmit power value of the first signal is not greater than a maximum output power value at which the sender of the first signal is configured in the cell associated with the first signal.

55. The method used in a first node according to claim 53 or 54, wherein the transmit power value of the first signal is equal to a smaller value between a first upper limit value and a first power value, the first upper limit value is a maximum output power at which the sender of the first signal is configured, and the first power value is linearly related to a product value of the power ramping step and a difference of the first count value minus 1.

56. The method used in a first node according to any one of claims 41 to 55, wherein the first information block comprises IE "RRCReconfiguration", the first information block comprises all or part of IE "LTM_Config-r18", the first information block comprises all or part of IE "RACH-ConfigGeneric", and the first information block comprises a field "power-RampingStep"; and the first information block comprises X1 sub-information blocks, which are used for determining the X1 candidate configurations, respectively.

57. The method used in a first node according to any one of claims 41 to 56, wherein the first signal is a PRACH, and the first signal is used for a random access procedure and an LTM procedure; and the cell associated with the first signal is a cell in which a corresponding index value or identifier value and time-frequency resources and/or sequences occupied by the first signal are all configured or indicated in the first PDCCH.

58. The method used in a first node according to any one of claims 41 to 57, wherein one cell determined by one of the X1 candidate configurations is a serving cell of the first node device, and one cell determined by one of the X1 candidate configurations is a non-serving cell of the first node device; and the X1 candidate configurations comprise one reference candidate configuration, and at least one candidate configuration other than the reference candidate configuration among the X1 candidate configurations comprises a difference value with the reference candidate configuration.

59. The method used in a first node according to any one of claims 41 to 58, wherein the first information block is used for determining that at least one reserved bit in the DCI carried by the first PDCCH is used as the first field; and when the first information block is not provided, the number of bits comprised in the first field carried by the first PDCCH is equal to 0.

60. The method used in a first node according to any one of claims 41 to 59, wherein the first signal being associated with the cell to which the first PDCCH belongs comprises: the time - frequency resources and/or sequences occupied by the first signal and the index value associated with the cell to which the first PDCCH belongs are configured or indicated in the same PDCCH order; and the first signal being associated with the at least one cell determined by the target configuration comprises: configuration information of the first signal and an index (or identifier) of the at least one cell determined by the target configuration are configured in the same IE or field.

61. A method used in a second node for wireless communication, comprising:

sending a first information block, which is used for determining X1 candidate configurations, X1 being a positive integer;
sending a first PDCCH, which carries a first field, the first PDCCH carrying all or part of fields in a DCI format 1_0, and a value of a frequency domain resource assignment field comprised in DCI carried by the first PDCCH being equal to all "1"; and
receiving a first signal, the first PDCCH being used for triggering sending of the first signal, the first signal carrying a random access preamble sequence,
wherein any one of the X1 candidate configurations is used for determining at least one cell, any cell determined by any one of the X1 candidate configurations is a candidate cell, and the X1 candidate configurations correspond to X1 candidate values, respectively; when the value of the first field carried by the first PDCCH is equal to a value other than the X1 candidate values, the first signal is associated with a cell to which the first PDCCH belongs; and when the value of the first field carried by the first PDCCH is equal to one of the X1 candidate values, the value of the first field carried by the first PDCCH is used for determining a target configuration from the X1 candidate configurations, the first signal is associated with at least one cell determined by the target configuration, and the first signal is used for obtaining timing advance of at least one cell determined for the target configuration.

62. The method used in a second node according to claim 61, wherein a first number value is equal to the number of bits comprised in the first field carried by the first PDCCH, the first number value is equal to a ceiling value of a logarithmic value of a base-2 reference value, and the reference value is equal to X1 plus 1.

63. The method used in a second node according to claim 62, wherein the first number value is not greater than 4, and the first number value satisfies: the first number $\text{value} = \lceil \log_2(X1 + 1) \rceil$.

64. The method used in a second node according to any one of claims 61 to 63, wherein the X1 candidate configurations are used for configuring X1 identifiers, respectively, the X1 candidate configurations are in one-to-one correspondence with the X1 candidate values in an order of the X1 identifiers, and the target configuration is a candidate configuration corresponding to the value of the first field carried by the first PDCCH among the X1 candidate configurations.

65. The method used in a second node according to claim 64, wherein the X1 candidate configurations are in one-to-one correspondence with the X1 candidate values in an ascending order of the X1 identifiers; and an order of the target configuration among the X1 candidate configurations is the same as an order of the value of the first field carried by the first PDCCH among the X1 candidate values.

66. The method used in a second node according to any one of claims 61 to 65, wherein any one of the X1 candidate values belongs to a first candidate value set, the value of the first field carried by the first PDCCH belongs to the first candidate value set, and the first candidate value set comprises a plurality of candidate values; the first signal being associated with the cell to which the first PDCCH belongs depends on the value of the first field carried by the first PDCCH being equal to a target value; and the target value is one candidate value in the first candidate value set.

67. The method used in a second node according to claim 66, wherein when the value of the first field carried by the first PDCCH is equal to the target value, the first signal is associated with the cell to which the first PDCCH belongs; when the value of the first field carried by the first PDCCH is equal to one of the X1 candidate values, the first signal is associated with at least one cell determined by the target configuration; and the target value is equal to 0.

68. The method used in a second node according to any one of claims 61 to 67, comprising:

receiving a second information block,
wherein the second information block is used for indicating at least one capability parameter of a sender of the second information block, and the second information block is used for determining that the first PDCCH carries the first field; a time interval length between the first PDCCH and the first signal in time domain is not less than a first threshold, the time interval length between the first PDCCH and the first signal in time domain is a time interval length between a latest symbol of reception of the first PDCCH and an earliest symbol of transmission of the first signal, and a unit of the first threshold is millisecond; and at least one of a relationship between the cell associated with the first signal and the cell to which the first PDCCH belongs or the second information block is used for determining the first threshold.

69. The method used in a second node according to claim 68, wherein the first threshold is linearly correlated with a target parameter value; when the relationship between the cell associated with the first signal and the cell to which the first PDCCH belongs is a first relationship, the target parameter value is equal to a first candidate value; when the relationship between the cell associated with the first signal and the cell to which the first PDCCH belongs is a second relationship, the target parameter value is equal to a second candidate value; and the first candidate value and the second candidate value are not equal, the first candidate value is predefined, the second candidate value is predefined, or is configurable, or is related to a capability of a sender of the first signal.

70. The method used in a second node according to claim 68 or 69, wherein the relationship between the cell associated with the first signal and the cell to which the first PDCCH belongs is used for determining a value of a parameter $\Delta_{\text{BWPSwitching}}$ used when the first threshold is calculated; and the relationship between the cell associated with the first signal and the cell to which the first PDCCH belongs is used for determining a value of a parameter $\Delta_{\text{LTM}}$ used when the first threshold is calculated, the parameter $\Delta_{\text{LTM}}$ is a value of a parameter other than a parameter $N_{T,2}$, a parameter $\Delta_{\text{BWPSwitching}}$, a parameter $\Delta_{\text{Delay}}$, or a parameter $T_{\text{switch}}$.

71. The method used in a second node according to claim 68 or 69, wherein the second information block is used for determining a value of a parameter $\Delta_{\text{LTM}}$ used when the first threshold is calculated, and the parameter $\Delta_{\text{LTM}}$ is a value of a parameter other than a parameter $N_{T,2}$, a parameter $\Delta_{\text{BWPSwitching}}$, a parameter $\Delta_{\text{Delay}}$, or a parameter $T_{\text{switch}}$.

72. The method used in a second node according to any one of claims 61 to 71, wherein any one of the X1 candidate configurations comprises at least a physical cell identifier, and an upper limit value of X1 is equal to 8; and the target configuration is a candidate configuration corresponding to the value of the first field carried by the first PDCCH among the X1 candidate configurations.

73. The method used in a second node according to any one of claims 61 to 72, wherein the first information block is used for determining a power ramping step, the first PDCCH is used for determining a first count value, the power ramping step and the first count value are together used for determining a transmit power value of the first signal, and the power ramping step is equal to one of 0dB, 2dB, 4dB, or 6dB.

74. The method used in a second node according to claim 73, wherein the power ramping step is equal to a power ramping step of a PRACH configured for a cell other than the cell to which the first PDCCH belongs, and the transmit power value of the first signal is not greater than a maximum output power value at which the sender of the first signal is configured in the cell associated with the first signal.

75. The method used in a second node according to claim 73 or 74, wherein the transmit power value of the first signal is equal to a smaller value between a first upper limit value and a first power value, the first upper limit value is a maximum output power at which the sender of the first signal is configured, and the first power value is linearly related to a product value of the power ramping step and a difference of the first count value minus 1.

76. The method used in a second node according to any one of claims 61 to 75, wherein the first information block comprises IE "RRCReconfiguration", the first information block comprises all or part of IE "LTM_Config-r18", the first information block comprises all or part of IE "RACH-ConfigGeneric", and the first information block comprises a field "powerRampingStep"; and the first information block comprises X1 sub-information blocks, which are used for determining the X1 candidate configurations, respectively.

77. The method used in a second node according to any one of claims 61 to 76, wherein the first signal is a PRACH, and the first signal is used for a random access procedure and an LTM procedure; and the cell associated with the first signal is a cell in which a corresponding index value or identifier value and time-frequency resources and/or sequences occupied by the first signal are all configured or indicated in the first PDCCH.

78. The method used in a second node according to any one of claims 61 to 77, wherein one cell determined by one of the X1 candidate configurations is a serving cell of the first node device, and one cell determined by one of the X1 candidate configurations is a non-serving cell of the first node device; and the X1 candidate configurations comprise one reference candidate configuration, and at least one candidate configuration other than the reference candidate configuration among the X1 candidate configurations comprises a difference value with the reference candidate configuration.

79. The method used in a second node according to any one of claims 61 to 78, wherein the first information block is used for determining that at least one reserved bit in the DCI carried by the first PDCCH is used as the first field; and when the first information block is not provided, the number of bits comprised in the first field carried by the first PDCCH is equal to 0.

80. The method used in a second node according to any one of claims 61 to 79, wherein the first signal being associated with the cell to which the first PDCCH belongs comprises: the time - frequency resources and/or sequences occupied by the first signal and the index value associated with the cell to which the first PDCCH belongs are configured or indicated in the same PDCCH order; and the first signal being associated with the at least one cell determined by the target configuration comprises: configuration information of the first signal and an index (or identifier) of the at least one cell determined by the target configuration are configured in the same IE or field.

100

Receive a first information block —101

↓

Receive a first PDCCH —102

↓

Send a first signal —103

FIG. 1

5GS/EPS 200

HSS/UDM —220

NR-
RAN/EUTRAN
202

UE —201

NR/Evolved
node B —203

MME/AMF/
SMF —211

Other
MME/AMF/SMF —214

UE —241

Other NR/
Evolved
node B —204

S-GW/UPF —212

P-GW/UPF —213

Internet service —230

5GC/EPC
210

FIG. 2

Control plane
300

L3 | RRC —306
L2 | PDCP —304
| RLC —303
| MAC —302
L1 | PHY —301

305

User plane
350

| SDAP —356
L2 | PDCP —354
| RLC —353
| MAC —352
L1 | PHY —351

355

FIG. 3

FIG. 4

| N500. Second node | | U550. First node |
|---|---|---|
| | | S551. Send a second information block |
| ← Second information block | | |
| S501. Receive the second information block | | |
| S502. Send a first information block | | |
| First information block → | | |
| | | S552. Receive the first information block |
| S503. Send a first PDCCH | | |
| First PDCCH → | | |
| | | S553. Receive the first PDCCH |
| | | S554. Send a first signal |
| ← First signal | | |
| S504. Receive the first signal | | |
| S505. Send a second PDCCH | | |
| Second PDCCH → | | |
| | | S555. Monitor the second PDCCH |
| End | | End |

FIG. 5

$$\text{A first number value} = \lceil \log_2(X1 + 1) \rceil$$

FIG. 6

| Candidate Value | Candidate Configuration |
|---|---|
| Other | N/A |
| Candidate Value #1 | 1st candidate configuration |
| Candidate Value #2 | 2nd candidate configuration |
| Candidate Value #3 | 3rd candidate configuration |
| Candidate Value #4 | 4th candidate configuration |
| …… | …… |
| Candidate Value #X1 | X1-th candidate configuration |

FIG. 7

| A First Candidate Value Set | A cell Associated With a First Signal |
|---|---|
| Target value | A cell to which a first PDCCH belongs |
| Candidate Value #1 | A cell determined by a 1st candidate configuration |
| Candidate Value #2 | A cell determined by a 2nd candidate configuration |
| Candidate Value #3 | A cell determined by a 3rd candidate configuration |
| Candidate Value #4 | A cell determined by a 4th candidate configuration |
| …… | …… |
| Candidate Value #X1 | A cell determined by a X1-th candidate configuration |
| Reserved value | N/A |
| Reserved value | N/A |

FIG. 8

FIG. 9

FIG. 10

FIG. 11

1200

First node device

First receiver
1201

First transmitter
1202

FIG. 12

1300

Second node device

Second transmitter
1301

Second receiver
1302

FIG. 13

## INTERNATIONAL SEARCH REPORT

| International application No. |
| --- |
| **PCT/CN2024/082774** |

| A. | CLASSIFICATION OF SUBJECT MATTER |
| --- | --- |
| | H04L 5/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, CNKI, USTXT, WOTXT, EPTXT, 3GPP: 信息块, 候选, PDCCH, 域, 小区, 关联, 相关, 定时, 提前, information block, candidat+, domain, cell, relat+, associat+, tim+, early+, ahead

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112437488 A (QUECTEL WIRELESS SOLUTIONS CO., LTD.) 02 March 2021 (2021-03-02) <br> entire document | 1-80 |
| A | CN 114598417 A (SHANGHAI LANGBO COMMUNICATION TECHNOLOGY CO., LTD.) 07 June 2022 (2022-06-07) <br> entire document | 1-80 |
| A | CN 115002786 A (SHANGHAI LANGBO COMMUNICATION TECHNOLOGY CO., LTD.) 02 September 2022 (2022-09-02) <br> entire document | 1-80 |
| A | US 2020196283 A1 (LG ELECTRONICS INC.) 18 June 2020 (2020-06-18) <br> entire document | 1-80 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **16 May 2024** | **21 May 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/082774**

| Patent document cited in search report | | | Publication date (day/month/year) | Patent family member(s) | | | Publication date (day/month/year) |
|---|---|---|---|---|---|---|---|
| CN | 112437488 | A | 02 March 2021 | None | | | |
| CN | 114598417 | A | 07 June 2022 | None | | | |
| CN | 115002786 | A | 02 September 2022 | None | | | |
| US | 2020196283 | A1 | 18 June 2020 | WO | 2018230902 | A1 | 20 December 2018 |
| | | | | US | 11096163 | B2 | 17 August 2021 |
| | | | | EP | 3641195 | A1 | 22 April 2020 |
| | | | | EP | 3641195 | A4 | 17 March 2021 |
| | | | | EP | 3641195 | B1 | 10 August 2022 |

Form PCT/ISA/210 (patent family annex) (July 2022)